# EUROPÄISCHE PATENTSCHRIFT

(11) **EP 1 056 797 B1**
(45) Veröffentlichungstag und Bekanntmachung des Hinweises auf die Patenterteilung: **08.05.2002**
(21) Anmeldenummer: 99911713.8
(22) Anmeldetag: 26.02.1999
(51) Int. Cl.: C08G 69/04, C08L 77/00

(54) **VERFAHREN ZUR HERSTELLUNG VON POLYMERMISCHUNGEN AUS AMINONITRILEN UND THERMOPLASTISCHEN POLYMEREN**
METHOD FOR PRODUCING POLYMER MIXTURES COMPRISED OF AMINO NITRILES AND THERMOPLASTIC POLYMERS
PROCEDE DE PREPARATION DE MELANGES POLYMERES A BASE D'AMINONITRILES ET DE POLYMERES THERMOPLASTIQUES

(30) Priorität: 27.02.1998 DE 19808489
(43) Veröffentlichungstag der Anmeldung: 06.12.2000
(73) Patentinhaber: BASF AKTIENGESELLSCHAFT, 67056 Ludwigshafen (DE)
(72) Erfinder: MOHRSCHLADT, Ralf, D-68723 Schwetzingen (DE); WEBER, Martin, D-67487 Maikammer (DE); HILDEBRANDT, Volker, D-68169 Mannheim (DE)
(74) Vertreter: Isenbruck, Günter, Dr.
(86) Internationale Anmeldenummer: EP9901257
(87) Internationale Veröffentlichungsnummer: WO9943733

(56) Entgegenhaltungen:
- EP-A- 0 374 988
- EP-A- 0 479 306
- WO-A-98/08889
- DE-A- 2 122 735
- DE-A- 3 534 817
- DE-A- 4 102 996
- DE-A- 4 339 648
- DE-A- 4 430 480

## Beschreibung

Die vorliegende Erfindung betrifft ein neues Verfahren zur Herstellung von Polymermischungen, bei dem Aminonitrile in Gegenwart von Wasser, thermoplastischen Polyamiden und gegebenenfalls weiteren polyamidbildenden Monomeren umgesetzt werden.

Einheitlich zusammengesetzte Kunststoffe haben Nachteile, die ihre Anwendungsmöglichkeiten einschränken. Durch Polymermischungen können die unterschiedlichen Eigenschaften der Mischungspartner kombiniert und somit die Eigenschaftsprofile von Kunststoffen verbessert werden. Aus diesem Grund werden beispielsweise Mischungen aus Polyamiden und amorphen Kunststoffen wie Polyarylenethersulfonen oder Polyetherimiden hergestellt.

Die Polyamide können hierbei auf unterschiedlichste Weise hergestellt werden. Zu den wichtigsten Methoden zur Herstellung von Polyamiden gehört die ringöffnende hydrolytische Polymerisation von Lactamen. Eine Variante dieses Verfahrens, die auch großtechnisch durchgeführt werden kann, ist beispielsweise in der DE-A 43 21 683 beschrieben.

Die Herstellung von Polyamiden aus Aminonitrilen stellt eine alternative Herstellroute dar und ermöglicht die Nutzung anderer Rohstoffe. So werden in den prioritätsälteren, nicht vorveröffentlichten DE-A 197 09 390 kontinuierliche und diskontinuierliche Verfahren zur Herstellung von Polyamiden aus Aminonitrilen und Wasser bei erhöhter Temperatur und erhöhtem Druck beschrieben.

Um Polyamid enthaltende Blends herzustellen, wird gemäß US 3,729,527 unter anderem ε-Caprolactam in Gegenwart von Polyarylenethersulfon polymerisiert. In der DE-A 41 02 996 wird ebenfalls vorgeschlagen, Lactame in Gegenwart amorpher Polymere wie Polysulfonen, Polyphenylenethem, Polyetherimiden, Polyamidimiden oder Styrolcopolymeren zu polymerisieren, um Polymerlegierungen herzustellen. Die Polymerisation wird mittels starker Basen initiiert.

Werden die polymeren Blendkomponenten in der Schmelze, beispielsweise in einem Extruder, gemischt, so werden ihnen im allgemeinen Verträglichkeitsvermittler zugesetzt. Gemäß EP-A 0 374 988, McGrath et al., Polym. Prepr. 14,1032 (1973) oder Corning et al., Makromol. Chem. Macromol. Symp. 75, 159 (1993) kommen als Verträglichkeitsvermittler Copolymere aus Polyamid- und Polyarylenethersulfonsegmenten in Betracht, die dadurch hergestellt werden, daß das Polyarylenethersulfon in einer Lactamschmelze gelöst und das Lactam in Anwesenheit einer starken Base und unter Wasserausschluß polymerisiert wird.

Studien zur anionischen Polymerisation von Lactamen in Gegenwart von Polyetherimiden oder Polysulfonen in einem Extruder sind z.B. auch von Van Buskirk et al., Polym. Prepr.29(1), 557 (1988) durchgeführt worden.

Sämtliche oben genannte Verfahren setzen Lactame oder Polyamide, hergestellt aus Lactamen, zur Herstellung von Mischungen aus Polyamiden und thermoplastischen Polymeren ein.

Die genannten Verfahren haben den Nachteil, daß die Polymerketten der thermoplastischen Polymere durch den Angriff der in der Reaktionsmischung vorhandenen Anionen abgebaut werden. Darüber hinaus erfordert die anionische Polymerisation besondere technische Maßnahmen zur Kontrolle des Polymerisationsgrades, da die Reaktion im allgemeinen sehr schnell abläuft und es innerhalb kurzer Zeit zu einem starken Viskositätsanstieg kommt. Folglich können Produkte definierter Struktur, d.h. definierter Kettenlänge bzw. Viskosität nur unter Schwierigkeiten - wenn überhaupt - erhalten werden. Außerdem enthalten die Produkte Katalysatorreste und Abbau- oder Nebenprodukte, die sich oft nicht mehr entfernen lassen. Wird die Polymerisation in einem Extruder durchgeführt, so kann häufig kein vollständiger Umsatz erreicht werden, und das Endprodukt enhält noch Restmonomere. Ferner werden meist nur dunkle, z.B. braune Produkte erhalten.

Schnablegger et al., Acta Polym. 46,307 (1995), beschreiben die Umsetzung von ε-Caprolactam mit Polyarylenethersulfonen, die Aminophenylendgruppen enthalten. Dabei reagieren die Aminogruppen mit dem ε-Caprolactam unter Ringöffnung und initiieren so die Polymerisationsreaktion. Die Reaktion wird in Abwesenheit von Wasser durchgeführt, und Phosphorsäure kann als Katalysator eingesetzt werden. Nachteil dieses Verfahrens ist, daß Polyarylenethersulfone mit zwei Aminophenylendgruppen pro Polymerkette nur aufwendig rein hergestellt werden können.

Aufgabe der vorliegenden Erfindung war es, ein verbessertes Verfahren zur Herstellung von Zusammensetzungen auf der Basis unterschiedlicher thermoplastischer Kunststoffe und Polyamide (Polymermischungen) zur Verfügung zu stellen, das die Nachteile der bekannten Verfahren vermeidet.

Die Aufgabe wird erfindungsgemäß gelöst durch ein vorzugsweise kontinuierliches Verfahren zur Herstellung von Polymermischungen durch Umsetzung mindestens eines Aminonitrils mit Wasser in Gegenwart von thermoplastischen Polymeren, ausgewählt aus Polyarylenethem, Polyetherimiden, Polyamidimiden, Styrol-Homound -Copolymeren, kautschukelastischen Pfropfcopolymeren, Ethylencopolymeren, Polyamiden, hergestellt aus Dicarbonsäuren und Diaminen und Gemischen davon und gegebenenfalls weiteren polyamidbildenden Monomeren, das die folgenden Stufen umfaßt:
(1) Umsetzung mindestens eines Aminonitrils mit Wasser bei einer Temperatur von 90 bis 400 °C und einem Druck von 0,1 bis 35 x 10⁶ Pa, wobei ein Umsetzungsgemisch erhalten wird,
(2) weitere Umsetzung des Umsetzungsgemischs bei einer Temperatur von 150 bis 400°C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer flüssigen Phase, die Wasser enthält und den vorstehenden Katalysator enthalten kann, bei einer Temperatur von 150 bis 370°C, und einem Druck von 0,1 bis 30 x 10⁶ Pa, wobei die Polymermischung erhalten wird, wobei in einer oder mehreren der Stufen die thermoplastischen Polymere und gegebenenfalls weiteren poylamidbildenden Monomere zugesetzt werden, wobei die Umsetzung in den Stufen 1, 2 und/oder 3 in Gegenwart eines Brönsted-Säurekatalysators, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, durchgeführt wird.
   Vorzugsweise umfaßt das vorstehende Verfahren zusätzlich folgende Stufe:
(4) Nachkondensation der Polymermischung bei einer Temperatur von 200 bis 350°C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils die Polymermischung enthält, erhalten werden.

Die Aufgabe wird weiterhin gelöst durch ein vorzugsweise kontinuierliches Verfahren zur Herstellung von Polymermischungen durch Umsetzung mindestens eines Aminonitrils mit Wasser in Gegenwart von thermoplastischen Polymeren, ausgewählt aus Polyarylenethern, Polyetherimiden, Polyamidimiden, Styrol-Homo- und - Copolymeren, kautschukelastischen Pfropfcopolymeren, Ethylencopolymeren, Polyamiden, hergestellt aus Dicarbonsäuren und Diaminen und Gemischen davon und gegebenenfalls weiteren polyamidbildenden Monomeren, das die folgenden Stufen umfaßt:
(1) Umsetzung mindestens eines Aminonitrils mit Wasser bei einer Temperatur von 90 bis 400 °C und einem Druck von 0,1 bis 35 x 10⁶ Pa, wobei ein Umsetzungsgemisch erhalten wird,
(2) weitere Umsetzung des Umsetzungsgemischs bei einer Temperatur von 150 bis 400°C und einem Druck, der niedriger ist als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Nachkondensation der ersten flüssigen oder der ersten festen Phase oder des Gemischs aus erster flüssiger und erster fester Phase bei einer Temperatur von 200 bis 350°C und einem Druck, der niedriger ist als der Druck der Stufe 2, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils die Polymermischung enthält, erhalten werden, wobei-in einer oder mehreren der Stufen die thermoplastischen Polymere und gebenenfalls weiteren polyamidbildenden Monomere zugesetzt werden, wobei die Umsetzung in den Stufen 1, 2 und/oder 3 in Gegenwart eines Brönsted-Säurekatalysators ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, durchgeführt wird.

Gemäß der vorliegenden Erfindung werden als Edukte Aminonitrile, Wasser, thermoplastische Polymere und gegebenenfalls weitere polyamidbildende Monomere eingesetzt. Neben der Nutzung von Aminonitrilen als Polyamid-Edukte hat die Erfindung den Vorteil, daß die Polymermischungen nicht nach der Herstellung von Polyamiden, sondern im Zuge der Umsetzung der Aminonitrile entstehen, was die kostengünstige Herstellung fein dispergierter Mischungen mit verbesserten Produkteigenschafien ermöglicht.

Dabei wird das thermoplastische Polymer vorzugsweise in den Stufen 3 und/oder 4 zugesetzt. Vorzugsweise liegen keine weiteren Monomere vor.

Die prinzipielle Vorgehensweise zur Herstellung des reinen Polyamids ist in der prioritätsälteren, nicht vorveröffentlichten DE-A-197 09 390 beschrieben.

Als Aminonitril können im Gemisch prinzipiell alle Aminonitrile, d.h. Verbindungen, die sowohl mindestens eine Amino- als auch mindestens eine Nitrilgruppe aufweisen, eingesetzt werden. Unter diesen sind ω-Aminonitrile bevorzugt, wobei unter letzteren insbesondere ω-Aminoalkylnitrile mit 4 bis 12 C-Atomen, weiter bevorzugt 4 bis 9 C-Atomen im Alkylenrest, oder ein Aminoalkylarylnitril mit 8 bis 13 C-Atomen eingesetzt werden, wobei dort solche bevorzugt werden, die zwischen der aromatischen Einheit und der Amino- und Nitrilgruppe eine Alkylengruppe mit mindestens einem C-Atom aufweisen. Unter den Aminoalkylarylnitrilen sind insbesondere solche bevorzugt, die die Amino- und Nitrilgruppe in 1,4-Stellung zueinander aufweisen.

Als ω-Aminoalkylnitril setzt man weiter bevorzugt lineare ω-Aminoalkylnitrile ein, wobei der Alkylenrest (-CH₂-) vorzugsweise 4 bis 12 C-Atome, weiter bevorzugt von 4 bis 9 C-Atome enthält, wie 6-Amino-1-cyanopentan (6-Aminocapronitril), 7-Amino-1-cyanohexan, 8-Amino-1-cyanoheptan, 9-Amino-1-cyanooctan, 10-Amino-1-cyanononan, besonders bevorzugt 6-Aminocapronitril.

6-Aminocapronitril erhält man üblicherweise durch Hydrierung von Adipodinitril nach bekannten Verfahren, beispielsweise beschrieben in DE-A 836 938, DE-A 848 654 oder US 5,151,543.

Selbstverständlich können auch Gemische mehrer Aminonitrile oder Gemische eines Aminonitrils mit weiteren Comonomeren, wie Caprolactam oder das untenstehend näher definierte Gemisch eingesetzt werden.

### Polyamidbildende Monomere

Als weitere polyamidbildende Monomere kann man beispielsweise Dicarbonsäuren, wie Alkandicarbonsäuren mit 6 bis 12 Kohlenstoffstomen, insbesondere 6 bis 10 Kohlenstoffatomen, wie Adipinsäure, Pimelinsäure, Korksäure, Azelainsäure oder Sebazinsäure sowie Terephthalsäure und Isophthalsäure; Diamine wie C₄₋₁₂-Alkyldiamine, insbesondere mit 4 bis 8 Kohlenstoffatomen wie Hexamethyldiamin, Tetramethylendiamin oder Octamethylendiamin, ferner m-Xylylendiamin, Bis-(4-aminophenyl)methan, Bis-(4-aminophenyl)-propan,2,2 oder Bis-(4-aminocyclohexyl)methan, Bis-(4-aminophenyl)-propan-2,2 oder Bis-(aminocyclohexyl)methan, sowie Mischungen von Dicarbonsäuren und Diaminen jeweils für sich in beliebigen Kombinationen, im Verhältnis zueinander jedoch vorteilhaft im äquivalenten Verhältnis wie Hexamethylendiammoniumadipat, Hexamethylendiammoniumterephthalalat oder Tetramethylendiammoniumadipat, bevorzugt Hexamethylendiammoniumadipat und Hexamethylendiammonium-terephthalat einsetzen. Besondere technische Bedeutung haben Polycaprolactam und Polyamide, die aus Caprolactam, Hexamethylendiamin sowie Adipinsäure, Isophthalsäure und/oder Terephthalsäure aufgebaut sind, erlangt. In einer bevorzugten Ausführungsform setzt man ε-Caprolactam und Hexamethylendiammoniumadipat ("AH"-Salz) ein.

In einer besonderen Ausführungsform, insbesondere wenn man Copolyamide oder verzweigte oder kettenverlängerte Polyamide herstellen möchte, setzt man anstelle von reinem 6-Aminocapronitril folgendes Gemisch ein:
50 bis 99,99, bevorzugt 80 bis 90 Gew.-% 6-Aminocapronitril,
0,01 bis 50, bevorzugt von 1 bis 30 Gew.-% mindestens einer Dicarbonsäure, ausgewählt aus der Gruppe bestehend aus aliphatischen C₄-C₁₀-α,ω-Dicarbonsäuren, aromatischen C₈-C₁₂-Dicarbonsäuren und C₅-C₈-Cycloalkandicarbonsäuren,
0 bis 50 bevorzugt 0,1 bis 30 Gew.-% eines , α,ω-Diamins mit 4 bis 10 Kohlenstoffatomen,
0 bis 50 bevorzugt 0 bis 30 Gew.-% eines a,ω-C₂-C₁₂-Dinitrils sowie
0 bis 50 bevorzugt 0 bis 30 Gew.-% eines a,ω-C₅-C₁₂-Aminosäure oder des entsprechenden Lactams,
0 bis 10 Gew.-% mindestens einer anorganischen Säure oder deren Salz,
wobei die Summe der einzelnen Gewichtsprozentangaben 100 % beträgt.

Als Dicarbonsäuren kann man aliphatische C₄-C₁₀- α,ω-Dicarbonsäuren, wie Bemsteinsäure, Glutarsäure, Adipinsäure, Pimelinsäure, Korksäure, Azelainsäure, Sebazinsäure, bevorzugt Adipinsäure und Sebazinsäure, besonders bevorzugt Adipinsäure, und aromatische C₈-C₁₂-Dicarbonsäuren wie Terephthalsäure sowie C₅-C₈-Cycloalkandicarbonsäuren wie Cyclohexandicarbonsäure einsetzen.

Als α,ω-Diamin mit 4 bis 10 Kohlenstoffatomen kann man Tetramethylendiamin, Pentamethylendiamin, Hexamethylendiamin, Heptamethylendiamin, Octamethylendiamin, Nonamethylendiamin und Decamethylendiamin, bevorzugt Hexamethylendiamin, einsetzen.

Des weiteren ist es auch möglich, Salze aus den genannten Dicarbonsäuren und Diaminen einzusetzen, insbesondere das Salz aus Adipinsäure und Hexamethylendiamin, sogenanntes AH-Salz.

Als α,ω-C₂-C₁₂-Dinitril setzt man bevorzugt aliphatische Dinitrile, wie 1,4-Dicyanbutan (Adipodinitril), 1,5-Dicyanpentan, 1,6-Dicyanhexan, 1,7-Dicyanheptan, 1,8-Dicyanoctan, 1,9-Dicyannonan, 1,10-Dicyandecan, besonders bevorzugt Adipodinitril, ein.

Gewünschtenfalls kann man auch Diamine, Dinitrile und Aminonitrile, die sich von verzweigten Alkylen- oder Arylen- oder Alkylarylenen ableiten, verwenden.

Als α,ω-C₅-C₁₂-Aminosäure kann man 5-Aminopentansäure, 6-Aminohexansäure, 7-Aminoheptansäure, 8-Aminooctansäure, 9-Aminononansäure, 10-Aminodecansäure, 11-Aminoundecansäure und 12-Aminododecansäure, bevorzugt 6-Aminohexansäure, einsetzen.

Die vorstehenden Verbindungen können auch als Gemische eingesetzt werden.

### Thermoplastische Polymere.

Als thermoplastische Polymere kommen Polymere in Betracht, die sich in Aminonitrilen, in deren Mischungen mit anderen polyamidbildenden Monomeren oder in deren Umsetzungsgemischen lösen und deren Polymerisation nicht beeinträchtigen. Unter Lösen wird erfindungsgemäß die Herstellung einer Schmelze verstanden, die dem Betrachter klar erscheint, d.h. die thermoplastischen Polymeren A können physikalisch gelöst oder fein dispergiert vorliegen.

Die geeigneten amorphen Polymere sind Polyarylenether wie Polyarylenethersulfone oder Polyphenylenether, Polyetherimide, Polyamidimide, Polystyrol oder Styrolcopolymere wie Styrol/Acrylnitril-Copolymere, Styrol/Dien-Copolymere, kautschukelastische Pfropfcopolymere auf der Basis von Dien- oder Acrylatkautschuken wie sogenannte ABS (Acrylnitril/Butadien/Styrol), ASA (Acrylnitril/Styrol/Acrylat) oder AES (Acrylnitril/Ethylen/Styrol) oder andere Ethylencopolymere und Polyamide, hergestellt aus Dicarbonsäuren und Diaminen. Ebenso können Mischungen unterschiedlicher Polymerer A gelöst werden.

Als Polyarylenether kommen vor allem die Verbindungen der allgemeinen Formel (I) in Betracht.

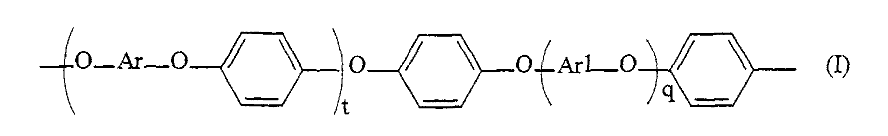

Die in der allgemeinen Formel I genannten Variablen t und q können jeweils den Wert 0, 1, 2 oder 3 annehmen. T, Q und Z können unabhänging voneinander gleich oder verschieden sein. Sie können eine chemische Bindung oder eine Gruppe ausgewählt aus -O-, -SO₂-, -S-, C=O, -N=N- und S=O sein. Daneben können T, Q und Z auch für eine Gruppe der allgemeinen Formel -R^{a}C=CR^{b}- oder -CR^{c}R^{d}- stehen, wobei R^{a} und R^{b} jeweils Wasserstoff oder C₁ bis C₁₀-Alkylgruppen, R^{c} und R^{d} jeweils Wasserstoff, C₁- bis C₁₀-Alkyl- wie Methyl, Ethyl, n-Propyl, i-Propyl, t-Butyl, n-Hexyl, C₁- bis C₁₀-Alkoxy wie Methoxy, Ethoxy, n-Propoxy, i-Propoxy, n-Butoxy oder C₆- bis C₁₈-Arylgruppen wie Phenyl oder Naphthyl bedeuten. R^{c} und R^{d} können auch zusammen mit dem Kohlenstoffatom, an das sie gebunden sind, zu einem Cycloalkylring mit 4 bis 7 Kohlenstoffatomen verknüpft sein. Bevorzugt werden darunter Cyclopentyl oder Cyclohexyl. Die Cycloalkylringe können unsubstituiert sein oder mit einem oder mehreren, bevorzugt zwei oder drei C₁- bis C₆-Alkylgruppen substituiert sein. Zu den bevorzugten Substituenten der Cycloalkylringe zählt Methyl. Bevorzugt werden Polyarylenether eingesetzt, in denen T, Q und Z -O-, -SO₂-, C=O, eine chemische Bindung oder eine Gruppe der Formel -CR^{c}R^{d} bedeuten. Zu den bevorzugten Resten R^{c} und R^{d} zählen Wasserstoff und Methyl. Von den Gruppen T, Q und Z bedeutet mindestens eine -SO₂- oder C=O. Sind die beiden Variablen t und q 0, dann ist Z entweder -SO₂- oder C=O, bevorzugt -SO₂-. Ar und Ar¹ stehen für C₆- bis C₁₈-Arylgruppen, wie 1,5-Naphthyl, 1,6-Naphthyl, 2,7-Naphthyl, 1,5-Anthryl, 9,10-Anthryl, 2,6-Anthryl, 2,7-Anthryl oder Biphenyl, insbesondere Phenyl. Vorzugsweise sind diese Arylgruppen nicht substituiert. Sie können jedoch einen oder mehrere, beispielsweise zwei Substituenten haben. Als Substituenten kommen C₁- bis C₁₀-Alkyl- wie Methyl, Ethyl, n-Propyl, i-Propyl, t-Butyl, n-Hexyl, C₆- bis C₁₈-Aryl wie Phenyl oder Naphthyl, C₁- bis C₁₀-Alkoxyreste wie Methoxy, Ethoxy, n-Propoxy, i-Propoxy, n-Butoxy und Halogenatome in Betracht. Zu den davon bevorzugten Substituenten gehören Methyl, Phenyl, Methoxy und Chlor.

Einige geeignete wiederkehrende Einheiten sind im folgenden aufgeführt:

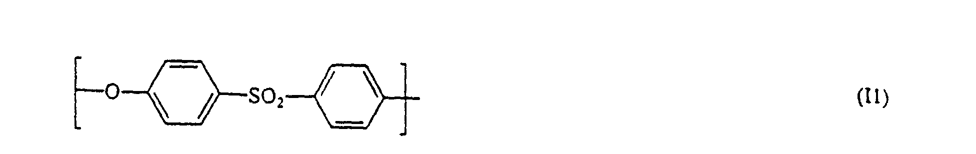

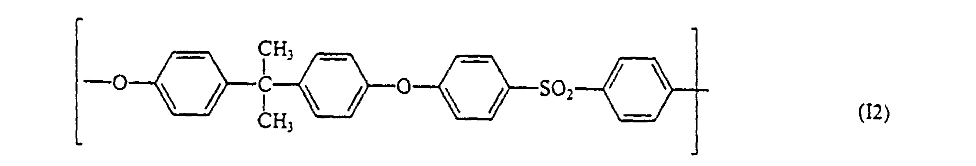

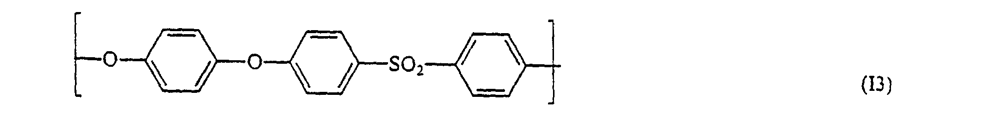

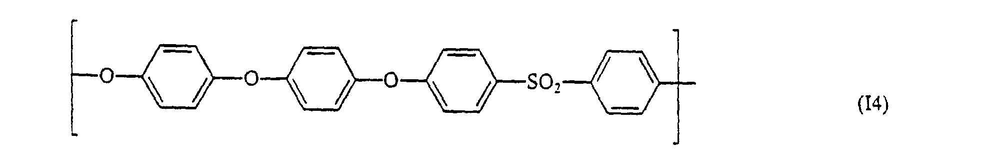

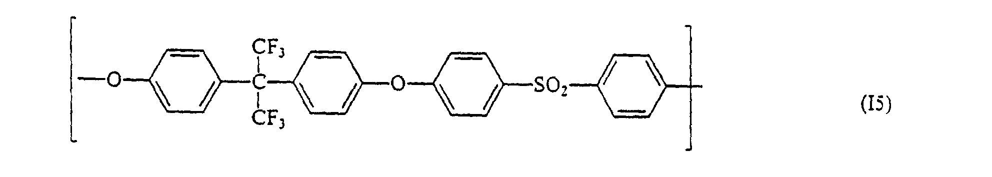

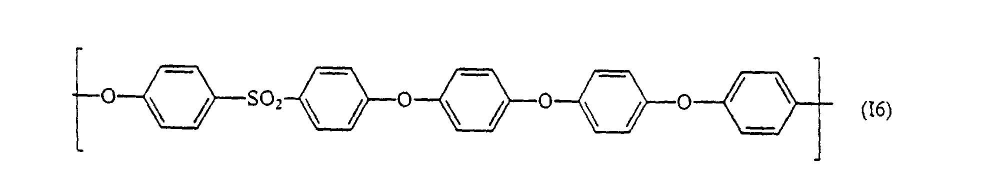

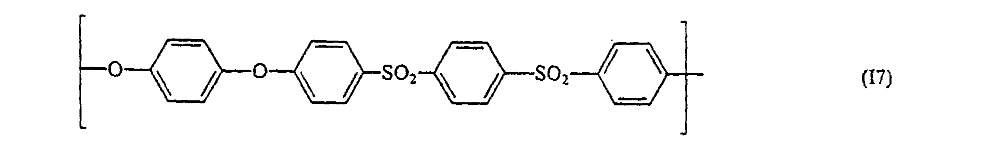

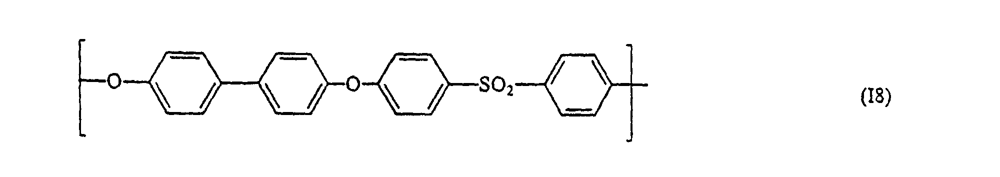

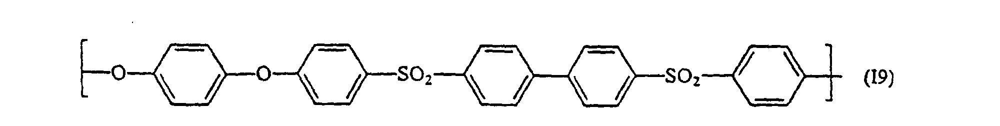

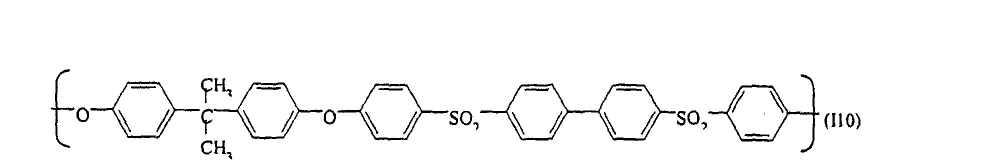

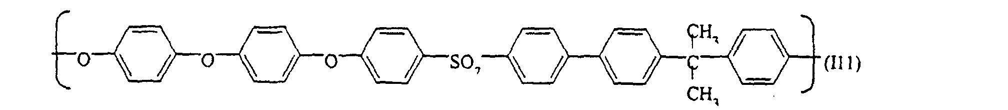

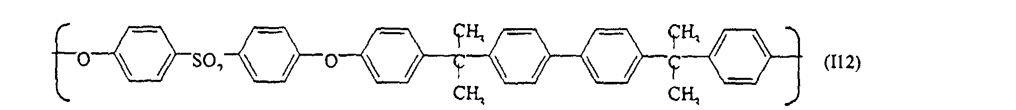

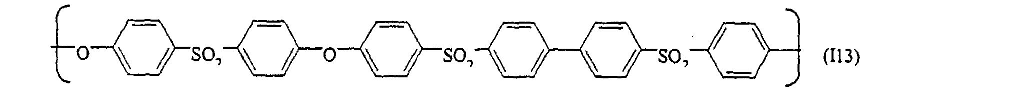

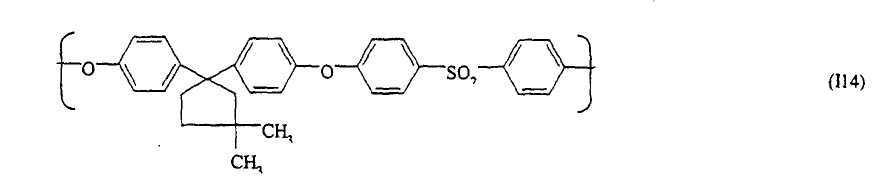

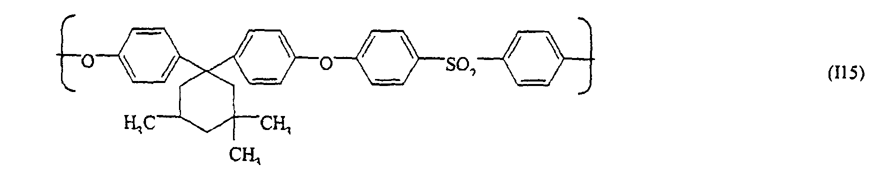

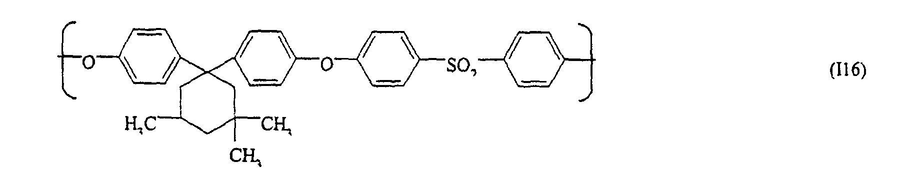

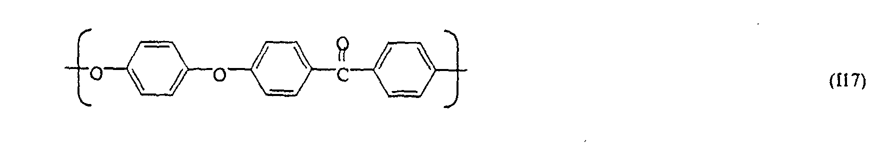

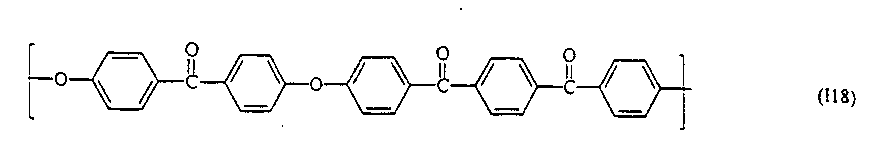

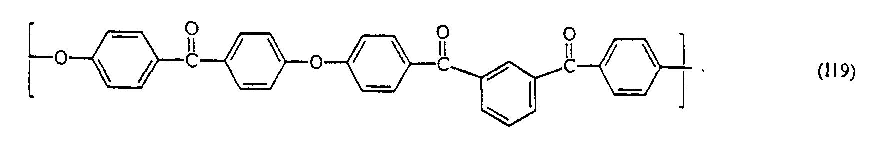

Ganz besonders bevorzugt werden Polyarylenether mit wiederkehrenden Einheiten (I1), (I2) oder (I8). Dazu zählen beispielsweise Polyarylenether mit 0 bis 100 Mol-% wiederkehrenden Einheiten (I1) und 0 bis 100 Mol-% wiederkehrenden Einheiten (I2).

Die Polyarylenether können auch Co- oder Blockcopolymere sein, in denen Polyarylenethersegmente und Segmente von anderen thermoplastischen Polymeren wie Polyestern, aromatischen Polycarbonaten, Polyestercarbonaten, Polysiloxanen, Polyimiden oder Polyetherimiden vorliegen. Die Molekulargewichte (Zahlenmittel) der Blöcke bzw. der Pfropfarme in den Copolymeren liegen in der Regel im Bereich von 1 000 bis 30 000 g/mol. Die Blöcke unterschiedlicher Struktur können alternierend oder statistisch angeordnet sein. Der Gewichtsanteil der Polyarylenether in den Co- oder Blockcopolymeren beträgt im allgemeinen mindestens 10 Gew.-%. Der Gewichtsanteil der Polyarylenether kann bis zu 97 Gew.-% betragen. Bevorzugt werden Co- oder Blockcopolymere mit einem Gewichtsanteil an Polyarylenether mit bis zu 90 Gew.-%. Besonders bevorzugt werden Co- oder Blockcopolymere mit 20 bis 80 Gew.-% Polyarylenether.

Als Polyarylenether kommen auch solche in Betracht, die mit Säure- oder Anhydridgruppen enthaltenden Monomeren modifiziert sind. Derartige Polyarylenether können z.B. ausgehend von den entsprechenden, Säure- und/oder Anhydridgruppen enthaltenden Monomeren hergestellt werden. Ebenso können sie durch Pfropfen dieser Monomere auf die Polyarylenetherkette erhalten werden. Zu den geeigneten Säuregruppen zählen Carbonsäure-, Sulfonsäure- und Phosphonsäuregruppen. Besonders bevorzugt werden Polyarylenethersulfone, die saure Gruppen, entweder sequentiell oder statistisch über die Polymerkette verteilt enthalten, wobei die sauren Gruppen z.B. an den Arylenresten oder Alkylenzwischengliedem gebunden sein können. Beispielsweise kommen Polyarylenethersulfone in Betracht, die mit Furmarsäure, Maleinsäure, Maleinsäureanhydrid oder besonders bevorzugt 4,4'-Dihydroxyvaleriansäure modifiziert sind. Beispiele für derartige Polyarylenethersulfone sind z.B. der EP-A-0 185 237 zu entnehmen.

Es können auch Mischungen aus zwei oder mehr unterschiedlichen Polyarylenethersulfonen eingesetzt werden.

Im allgemeinen weisen die Polyarylenether mittlere Molekulargewichte Mn (Zahlenmittel) im Bereich von 5 000 bis 60 000 g/mol und relative Viskositäten von 0,20 bis 0,95 dl/g auf. Die relativen Viskositäten werden je nach Löslichkeit der Polyarylenether entweder in 1 gew.-%iger N-Methylpyrrolidon-Lösung, in Mischungen aus Phenol und Dichlorbenzol oder in 96 %iger Schwefelsäure bei jeweils 20°C bzw. 25°C gemessen.

Polyarylenether mit wiederkehrenden Einheiten I sind an sich bekannt und können nach bekannten Methoden hergestellt werden.

Sie entstehen z.B. durch Kondensation aromatischer Bishalogenverbindungen und den Alkalidoppelsalzen aromatischer Bisphenole. Sie können beispielsweise auch durch Selbstkondensation von Alkalisalzen aromatischer Halogenphenole in Gegenwart eines Katalysators hergestellt werden. Polyarylenether, die Carbonylfimktionen enthalten, sind auch durch elektrophile (Friedel-Crafts)-Polykondensation zugänglich. Bei der elektrophilen Polykondensation werden zur Bildung der Carbonylbrücken entweder Dicarbonsäurechloride oder Phosgen mit Aromaten, welche zwei - durch elektrophile Substituenten austauschbare - Wasserstoffatome enthalten, umgesetzt, oder es wird ein aromatisches Carbonsäurechlorid, das sowohl eine Säurechloridgruppe als auch ein substituierbares Wasserstoffatom enthält, mit sich selbst polykondensiert.

Bevorzugte Verfahrensbedingungen zur Synthese von Polyarylenethern sind beispielsweise in den EP-A-0 113 112 und EP-A-0 135 130 beschrieben. Besonders geeignet ist die Umsetzung der Monomeren in aprotischen Lösungsmitteln, insbesondere N-Methylpyrrolidon, in Gegenwart von wasserfreiem Alkalicarbonat, insbesondere Kaliumcarbonat. Die Monomeren in der Schmelze umzusetzen hat sich in vielen Fällen ebenso als vorteilhaft erwiesen.

Die Polyarylenether der allgemeinen Formel I können als Endgruppen z.B. Hydroxy, Chlor, Alkoxy, darunter bevorzugt Methoxy, Phenoxy, Amino oder Anhydrid oder Mischungen der genannten Endgruppen aufweisen.

Die thermoplastischen Polymeren A können auch Verbindungen auf Basis substituierter, insbesondere disubstituierter Polyphenylenether sein, wobei der Ethersauerstoff der einen Einheit an den Benzolkern der benachbarten Einheit gebunden ist. Vorzugsweise werden in 2- und/oder 6-Stellung zum Sauerstoffatom substituierte Polyphenylenether verwendet. Als Beispiele für Substituenten sind Halogenatome, wie Chlor oder Brom, langkettige Alkylreste mit bis zu 20 Kohlenstoffatomen, wie Lauryl und Stearyl sowie kurzkettige Alkylreste mit 1 bis 4 Kohlenwasserstoffatomen, die vorzugsweise kein -ständiges tertiäres Wasserstoffatom aufweisen, z.B. Methyl-, Ethyl-, Propyl- oder Butylreste, zu nennen. Die Alkylreste können wiederum durch Halogenatome, wie Chlor oder Brom, oder durch eine Hydroxylgruppe einfach oder mehrfach substituiert sein. Weitere Beispiele möglicher Substituenten sind Alkoxyreste, vorzugsweise mit 1 bis zu 4 Kohlenstoffatomen oder gegebenenfalls durch Halogenatome und/oder C1-C4-Alkylgruppen gemäß obiger Definition einfach oder mehrfach substituierte Phenylreste. Ebenfalls geeignet sind Copolymere verschiedener Phenole, wie Copolymere von 2,6-Dimethylphenol und 2,3,6-Trimethylphenol. Selbstverständlich können auch Gemische verschiedener Polyphenylenether eingesetzt werden.

Beispiele für erfindungsgemäß verwendbare Polyphenylenether sind
Poly(2,6-dilauryl-1,4-phenylenether),
Poly(2,6-diphenyl-1,4-phenylenether),
Poly(2,6-dimethoxy-1,4-phenylenether),
Poly(2,6-diethoxy-1,4-phenylenether),
Poly(2-methoxy-6-ethoxy-1,4-phenylenether),
Poly(2-ethyl-6-stearyloxy-1,4-phenylenether),
Poly(2,6-dichlor-1,4-phenylenether),
Poly(2-methyl-6-phenyl-1,4-phenylenether),
Poly(2,6-dibenzyl-1,4-phenylenether),
Poly(2-ethoxy-1,4-phenylenether),
Poly(2-chlor-1,4-phenylenether),
Poly(2,5-dibrom-1,4-phenylenether).

Bevorzugt werden Polyphenylenether eingesetzt, die als Substituenten Alkylreste mit 1 bis 4 Kohlenstoffatomen aufweisen, wie
Poly(2,6-dimethyl-1,4-phenylenether),
Poly(2,6-diethyl-1,4-phenylenether),
Poly(2-methyl-6-ethyl-1,4-phenylenether),
Poly(2-methyl-6-propyl-1,4-phenylenether),
Poly(2,6-dipropyl-1,4-phenylenether) und
Poly(2-ethyl-6-propyl-1,4-phenylenether).

Unter Polyphenylenethern im Sinne der Erfindung sollen auch solche verstanden werden, die mit Monomeren, wie Fumarsäure, Maleinsäure oder Maleinsäureanhydrid, modifiziert sind.

Derartige Polyphenylenether sind u.a. in der WO 87/00540 beschrieben.

Insbesondere werden solche Polyphenylenether in den Zusammensetzungen eingesetzt, die ein mittleres Molekulargewicht Mw (Gewichtsmittel) von etwa 8 000 bis 70 000, bevorzugt etwa 12 000 bis 50 000 und insbesondere etwa 20 000 bis 49 000 aufweisen.

Dies entspricht einer Grenzviskosität von etwa 0,18 bis 0,7, bevorzugt von etwa 0,25 bis 0,55, und insbesondere von etwa 0,30 bis 0,50 dl/g, gemessen in Chloroform bei 25°C.

Die Bestimmung der Molekulargewichte der Polyphenylenether erfolgt im allgemeinen mittels Gelpermeationschromatographie (Shodex®-Trennsäulen 0,8 x 50 cm des Typs A 803, A 804 und A 805 mit THF als Elutionsmittel beim Raumtemperatur). Die Lösung der Polyphenylenether-Proben in THF erfolgt unter Druck bei 110°C, wobei 0,16 ml einer 0,25 Gew.-%igen Lösung injiziert werden.

Die Detektion erfolgt im allgemeinen mit einem UV-Detektor. Die Eichung der Säulen wurde mit Polyphenylenether-Proben durchgeführt, deren absolute Molekulargewichtsverteilung durch eine GPC-Laser-Lichtstreuungskombination bestimmt wird.

Des weiteren kommen als thermoplastische Polymere A Polyetherimide oder Mischungen unterschiedlicher Polyetherimide in Betracht.

Als Polyetherimide können im Prinzip sowohl aliphatische als auch aromatische Polyetherimide verwendet werden. Ebenso kommen Polyetherimide in Betracht, die sowohl aliphatische als auch aromatische Gruppen in der Hauptkette enthalten. Beispielsweise können Polyetherimide, die wiederkehrende Einheiten der allgemeinen Formel II 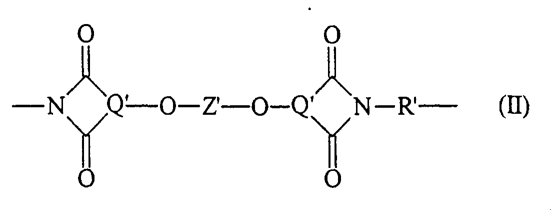 enthalten, eingesetzt werden, wobei Q' beispielsweise ausgewählt ist aus 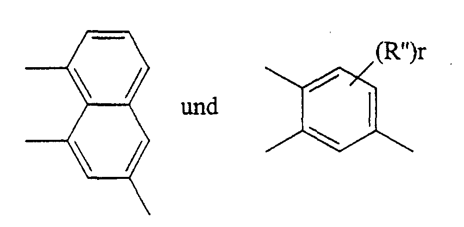 und
worin Z' und R' unabhängig voneinander gleich oder verschieden sein können. Z' und R' können z.B. eine C₁- bis C₃₀-Alkylengruppe bedeuten. Die Alkylengruppe kann sowohl linear als auch verzweigt oder auch zu einem Ring geschlossen sein. Darunter seien Methylen, Ethylen, n-Propylen, i-Propylen, Cyclohexylen oder n-Decylen genannt. Z' und R' können aber auch für einen C₇ - bis C₃₀-Alkylarylenrest stehen. Beispiele hierfür sind Diphenylenmethan, Diphenylenethan oder 2,2-Diphenylenpropan. Ferner können Z' und R' einen C₆ - bis C₁₈-Arylenrest wie Phenylen oder Biphenylen bedeuten. Die vorgenannten Gruppen können ihrerseits mit einem oder mehreren Substituenten substituiert, oder durch Heteroatome bzw. - gruppen, unterbrochen sein. Besonders bevorzugte Substituenten sind Halogenatome, bevorzugt Chlor oder Brom oder C₁ - bis C₁₀-Alkylreste, insbesonders Methyl oder Ethyl. Zu den bevorzugten Heteroatomen, bzw. -gruppen, zählen -SO₂-, -O-oder -S-. Im folgenden sind beispielhaft einige geeignete Reste Z' und R' aufgeführt: 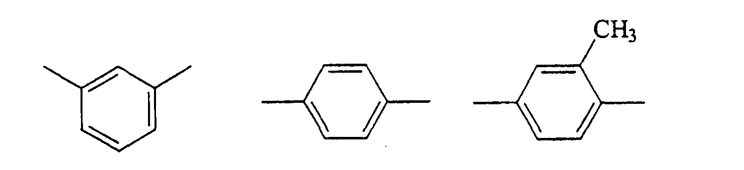 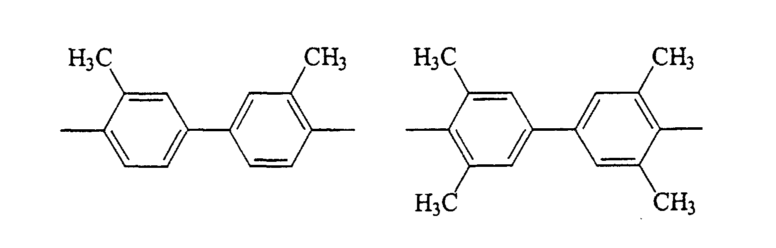 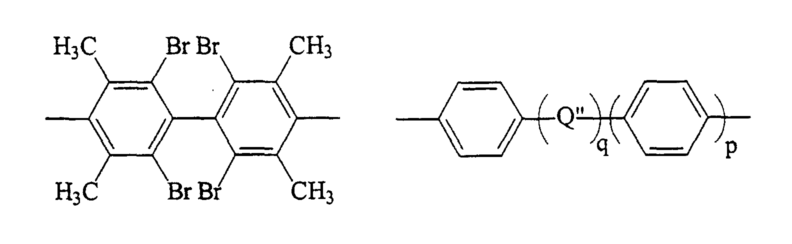 worin Q" -CyH₂y-, -CO-, -SO₂-, -O- oder -S- bedeuten kann, q 0 oder 1 ist, p 0 oder 1 bedeutet und y eine ganze Zahl von 1 bis 5 darstellt. R" kann C₁- bis C₁₀-alkyl oder C₁- bis C₁₀-Alkoxy bedeuten, und r kann Null oder 1 sein. Darüber hinaus können die Polyetherimide neben den Einheiten der allgemeinen Formel II, weitere Imideinheiten enthalten. Geeignet sind beispielsweise Einheiten der Formeln II1 oder II2 oder deren Mischungen:

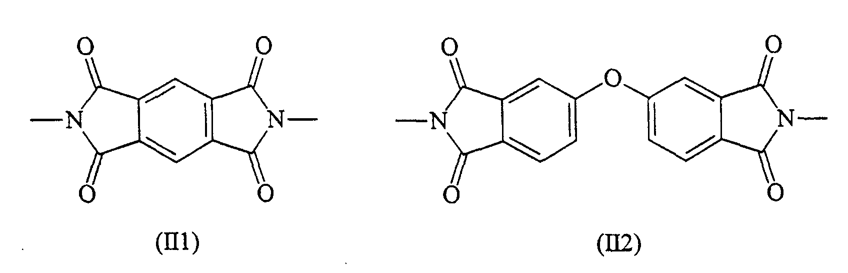

Bevorzugt werden Polyetherimide, die wiederkehrende Einheiten der allgemeinen Formel III 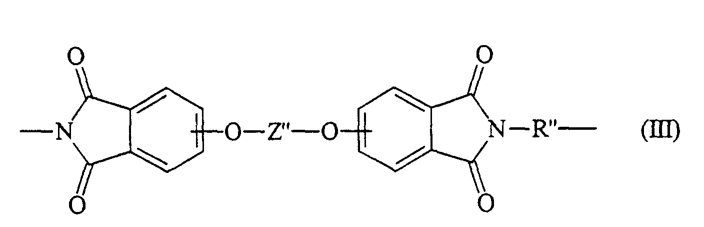 enthalten, eingesetzt, worin Z" und R" die gleiche Bedeutung haben wie Z' und R'.

Besonders bevorzugte Polyetherimide enthalten wiederkehrende Einheiten in denen Z" 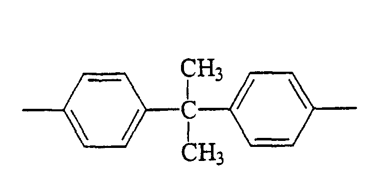 bedeutet und R" ausgewählt ist aus 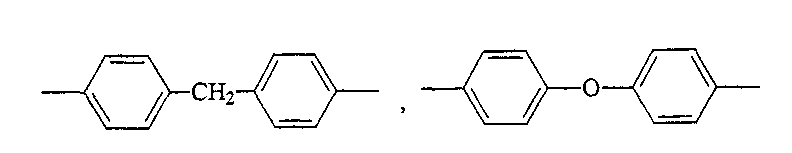 und

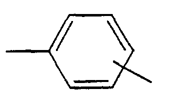

Ganz besonders bevorzugte Polyetherimide enthalten wiederkehrende Einheiten der Formel (III1)

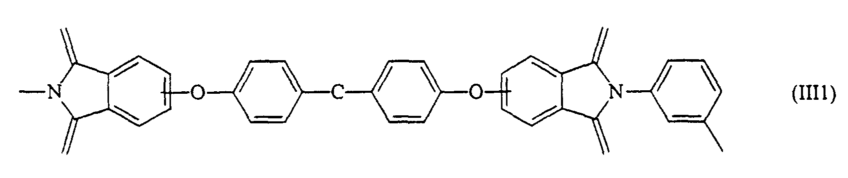

Die Polyetherimide haben im allgemeinen mittlere Molekulargewichte (Zahlenmittelwert Mn) von 5000 bis 50 000, bevorzugt von 8000 bis 40 000. Sie sind entweder bekannt oder nach bekannten Methoden erhältlich.

So können entsprechende Dianhydride mit entsprechenden Diaminen zu den Polyetherimiden umgesetzt werden. In der Regel findet diese Umsetzung in Substanz oder in einem inerten Lösungsmittel bei Temperaturen von 100 bis 250°C statt. Als Lösungsmittel eignen sich vor allem o-Dichlorbenzol oder m-Cresol. Ebenso können die Polyetherimide in der Schmelze bei Temperaturen von 200 bis 400°C, bevorzugt 230 bis 300°C hergestellt werden. Zur Herstellung der Polyetherimide werden im allgemeinen die Dianhydride mit den Diaminen im äquimoleren Verhältnis umgesetzt. Gewisse molare Überschüsse, z.B. 0,1 bis 5 Mol-% an Dianhydrid oder Diamin, sind jedoch möglich.

Erfindungsgemäß können als Polymere auch Polystyrole verwendet werden. Als Monomere kommen insbesondere Styrol in Betracht, ferner die kern- oder seitenkettenalkylierten Styrole. Als Beispiele seien Chlorstyrol, α-Methylstyrol, Styrol, p-Methylstyrol, Vinyltoluol und p-tert.-Butylstyrol genannt. Vorzugsweise wird jedoch Styrol allein verwendet.

Die Homopolymerisate werden im allgemeinen nach den bekannten Verfahren in Masse, Lösung oder Suspension hergestellt (vgl. Ullmanns Enzyklopädie der technischen Chemie, Band 19, Seiten 265 bis 272, Verlag Chemie, Weinheim 1980). Die Homopolymerisate können Gewichtsmittel des Molekulargewichts Mw von 100 bis 300.000 aufweisen, die nach üblichen Methoden bestimmt werden können.

Darüber hinaus können die thermoplastischen Polymeren Copolymere auf der Basis von Styrol sein, worunter erfindungsgemäß auch Copolymere auf der Basis anderer vinylaromatischer Monomerer wie α-Methylstyrol oder substituierter Styrole z.B. C₁- bis C₁₀-Alkylstyrole wie Methylstyrol oder Mischungen unterschiedlicher vinylaromatischer Monomerer verstanden werden.

Geeignet sind beispielsweise Styrolcopolymere aus
50 bis 95 Gew.-%, vorzugsweise 60 bis 80 Gew.-% Styrol, α-Methylstyrol oder substituierten Styrolen, N-Phenylmaleinimid oder deren Mischungen und
5 bis 50 Gew.-%, vorzugsweise 20 bis 40 Gew.-% Acrylnitril, Methacrylnitril, Methylmethacrylat, Maleinsäureanhydrid oder deren Mischungen.

Die Styrolcopolymere sind harzartig, thermoplastisch und kautschukfrei. Besonders bevorzugte Styrolcopolymere sind solche aus Styrol mit Acrylnitril und gegebenenfalls mit Methylmethacrylat, aus α-Methylstyrol mit Acrylnitril und gegebenenfalls mit Methylmethacrylat oder aus Styrol und α-Methylstyrol mit Acrylnitril und gegebenenfalls mit Methylmethacrylat und aus Styrol und Maleinsäureanhydrid. Es können auch mehrere der beschriebenen Styrolcopolymere gleichzeitig eingesetzt werden.

Diese Styrolcopolymere sind an sich bekannt und lassen sich durch radikalische Polymerisation, insbesondere durch Emulsions-, Suspensions-, Lösungs- und Massepolymerisation herstellen. Sie weisen in der Regel Viskositätszahlen im Bereich von etwa 40 bis 160 auf, dies entspricht mittleren Molekulargewichten Mw (Gewichtsmittelwert) von etwa 40 000 bis 2 000 000.

In dem erfindungsgemäßen Verfahren können auch Styrolcopolymere aus vinylaromatischen Monomeren, beispielsweise Styrol oder α-Methylstyrol und konjugierten Dienen verwendet werden. Ein besonders geeignetes vinylaromatisches Monomer ist dabei Styrol. Als konjugierte Diene werden u.a. Butadien oder Isopren eingesetzt, wobei Butadien bevorzugt verwendet wird. Als Styrolcopolymere können auch solche Copolymere eingesetzt werden, die dadurch erhältlich sind, daß man zunächst vinylaromatische Monomere mit konjugierten Dienen polymerisiert und anschließend einer Hydrierungsreaktion unterwirft.

Derartige Styrolcopolymere sind insbesondere durch anionische Polymerisation von vinylaromatischen Monomeren und konjugierten Dienen erhältlich. Dabei entstehen vorwiegend Blockcopolymerisate dieser Comonomere. Methoden zur Herstellung derartiger Styrolcopolymere sind allgemein bekannt, z.B. aus US 3,595,942.

Die verwendeten Styrolcopolymere können von beliebiger Struktur sein, besonders bevorzugt sind Blockcopolymere mit Dreiblockstruktur sowie verzweigte, sogenannte sternförmige Strukturen mit Multiblockstruktur. Die Synthese sternförmig aufgebauter Blockcopolymere aus vinylaromatischen Monomeren und Dienmonomeren sind beschrieben in DE-A 19 59 922, die Synthese sternförmig aufgebauter Blockcopolymerer mit mehrfacher Initiierung in DE-A -25 50 226 sowie der US-3,639,517.

Geeignete Monomere sowie Initiatoren sind ebenfalls den genannten Schriften zu entnehmen. Besonders bevorzugt werden dabei Blockcopolymere auf Basis von Styrol als vinylaromatisches Monomer sowie Butadien und/oder Isopren als konjugierte Dienmonomere. Der Anteil des vinylaromatischen Monomeren an den eingesetzten Styrolcopolymeren beträgt im allgemeinen von 25 bis 95, vorzugsweise 40 bis 90 Gew.-%.

Als thermoplastische Polymere können darüber hinaus Pfropfcopolymere verwendet werden, die vorzugsweise aufgebaut sind aus
a1) etwa 40 bis 80 Gew.-%, vorzugsweise 50 bis 70 Gew.-% einer Pfropfgrundlage aus einem kautschukelastischen Polymeren mit einer Glasübergangstemperatur von unter 0°C,
a2) etwa 20 bis 60 Gew.-%, vorzugsweise 30 bis 50 Gew.-% einer Pfropfauflage aus
a21) etwa 50 bis 95 Gew.-%, bevorzugt 60 bis 80 Gew.-% Styrol oder substituierten Styrolen obiger allgemeiner Formel III oder Methylmethacrylat oder deren Mischungen
a22) etwa 5 bis 50 Gew.-%, vorzugsweise etwa 20 bis 40 Gew.-% Acrylnitril, Methacrylnitril, Methylmethacrylat, Maleinsäureanhydrid oder deren Mischungen.

Für die Pfropfgrundlage a1) kommen Polymerisate in Betracht, deren Glasübergangstemperatur unterhalb von 10°C, vorzugsweise unterhalb von 0°C, insbesondere von -20°C liegt. Dies sind z.B. Naturkautschuk, Synthesekautschuk auf der Basis von konjugierten Dienen oder deren Mischungen mit anderen Copolymeren sowie Elastomere auf der Basis von C₁₋₈-Alkylestern der Acrylsäure, die weitere Comonomere enthalten können.

Bevorzugt kommen als Pfropfgrundlage a1) Polybutadien oder Copolymerisate aus Butadien und Styrol in Betracht.

Weiterhin sind Pfropfgrundlagen a1) bevorzugt, die aufgebaut sind aus
a11) 70 bis 99,9 Gew.-%, vorzugsweise 66 bis 79 Gew.-% mindestens eines Alkylacrylats mit 1 bis 8 C-Atomen im Alkylrest, vorzugsweise n-Butylacrylat und/oder 2-Ethylhexylacrylat, insbesondere n-Butylacrylat als alleiniges Alkylacrylat.
a12) 0 bis 30 Gew.-%, vorzugsweise 20 bis 30 Gew.-% eines weiteren copolymerisierbaren, monoethylenisch ungesättigten Monomers, wie Butadien, Isopren, Styrol, Acrylnitril, Methylmethacrylat und/oder Vinylmethylether,
a13) 0,1 bis 5 Gew.-%, vorzugsweise 1 bis 4 Gew.-% eines copolymersierbaren, polyfunktionellen, vorzugsweise bi- oder trifunktionellen, die Vernetzung bewirkenden Monomers.

Als solche bi- oder polyfunktionellen Vernetzungsmonomeren a13) eignen sich Monomere, die vorzugsweise zwei, gegebenenfalls auch drei oder mehr, zur Copolymerisation befähigte ethylenische Doppelbindungen enthalten, die nicht in den 1,3-Stellungen konjugiert sind. Geeignete Vemetzungsmonomere sind beispielsweise Divinylbenzol, Diallylmaleat, Diallylfumarat, Diallylphthalat, Triallylcyanurat oder Triallylisocyanurat. Als besonders günstiges Vemetzungsmonomeres hat sich der Acrylsäureester des Tricyclodecenylalkohols erwiesen (vgl. DE-A-12 60 135).

Auch diese Art von Pfropfgrundlagen ist an sich bekannt und in der Literatur beschrieben.

Von den Pfropfauflagen a2) sind diejenigen bevorzugt, in denen a₂₁) Styrol oder α-Methylstyrol bedeutet. Als bevorzugte Monomeren-Gemische werden vor allem Styrol und Acrylnitril, α-Methylstyrol und Acrylnitril, Styrol, Acrylnitril und Methylmethacrylat, Styrol, N-Phenylmaleinimid und Maleinsäureanhydrid eingesetzt. Die Pfropfauflagen sind erhältlich durch Copolymerisation der Komponenten a21) und a22).

Für den Fall, daß das Pfropfcopolymere eine Pfropfgrundlage a1) enthält, die aus Polybutadienpolymeren aufgebaut ist, so spricht man von ABS-Kautschuk.

Die Pfropfcopolymerisation kann, wie an sich bekannt, in Lösung, Suspension oder vorzugsweise in Emulsion erfolgen. Die Weichphase des Pfropfcopolymerisats weist bei der Herstellung des ABS-Kautschuks und der Pfropfung in Emulsion bevorzugt einen mittleren Teilchendurchmesser (d50-Wert der integralen Masseverteilung) von 0,08 mm auf. Durch Vergrößerung der Teilchen, z.B. durch Agglomerisation oder bei der Gewinnung der Emulsion im Wege des Saatlatex-Verfahrens, wird der d50-Wert im Bereich von 0,2 bis 0,5 mm eingestellt. Bei solchen Pfropfcopolymerisationen erfolgt eine zumindest teilweise chemische Verknüpfung der polymerisierenden Monomere mit dem bereits polymerisierten Kautschuk, wobei die Verknüpfung wahrscheinlich an den im Kautschuk enthaltenen Doppelbindungen erfolgt. Zumindest ein Teil der Monomeren ist dabei auf den Kautschuk gepfropft, also durch kovalente Bindungen an den Kautschuk-Fadenmolekülen gebunden.

Die Pfropfung kann auch mehrstufig erfolgen, indem zuerst ein Teil der die Pfropfhülle bildenden Monomere wird und anschliessend der Rest aufgepfropft.

Ist die Pfropfgrundlage a1) der Pfropfcopolymere aus den Komponenten a11), gegebenenfalls a12) und a13) aufgebaut, so spricht man von ASA-Kautschuken. Ihre Herstellung ist an sich bekannt oder kann nach an sich bekannten Methoden erfolgen.

Der Aufbau der Pfropfauflage der Pfropfcopolymeren kann ein- oder zweistufig erfolgen.

Im Falle des einstufigen Aufbaus der Pfropfauflage wird ein Gemisch der Monomeren a21) und a22) in dem gewünschten Gew.-Verhältnis im Bereich von 95:5 bis 50:50, vorzugsweise 90:10 bis *65:35* in Gegenwart des Elastomeren a1, in an sich bekannter Weise, vorzugsweise in Emulsion, polymerisiert.

Im Falle eines zweistufigen Aufbaus der Pfropfauflage a2) macht die erste Stufe im allgemeinen 20 bis 70 Gew.-%, vorzugsweise 25 bis 50 Gew.-%, bezogen auf a2), aus. Zu ihrer Herstellung werden vorzugsweise nur monoethylenisch ungesättigte aromatische Kohlenwasserstoffe (a21) verwendet.

Die zweite Stufe der Pfropfauflage macht im allgemeinen 30 bis 80 Gew.-%, nsbesondere 50 bis 75 Gew.-%, jeweils bezogen auf a2), aus. Zu ihrer Herstellung werden Mischungen aus den genannten monoethylenisch ungesättigten aromatischen Kohlenwasserstoffen a21) und monoethylenisch ungesättigten Monomeren a22) im Gewichtsverhältnis a21)/a22) von im allgemeinen 90:10 bis 60:40, insbesondere 80:20 bis 70:30 angewendet.

Die Bedingungen der Pfropfcopolymerisation werden vorzugsweise so gewählt, daß Teilchengrößen von 50 bis 700 nm (d₅₀-Wert der integralen Massenverteilung) resultieren. Maßnahmen hierzu sind bekannt.

Durch das Saatlatex-Verfahren kann direkt eine grobteilige Kautschukdispersion hergestellt werden.

Um möglichst zähe Produkte zu erzielen, ist es häufig von Vorteil, eine Mischung mindestens zweier Pfropfcopolymerisate mit unterschiedlicher Teilchengröße zu verwenden.

Um dies zu erreichen, werden die Teilchen des Kautschuks in bekannter Weise, z.B. durch Agglomeration vergrößert, so daß der Latex bimodal (z.B. 50 bis 180 nm und 200 bis 700 nm) aufgebaut ist.

Weiterhin seien als thermoplastische Polymere A Copolymere von aufgepfropft aufgepfropft aufgepfropft α-Olefinen genannt. Bei den α-Olefinen handelt es sich üblicherweise um Monomere mit 2 bis 8 C-Atomen, vorzugsweise Ethylen und Propylen. Als Comonomere haben sich Alkylacrylate oder Alkylmethacrylate, die sich von Alkoholen mit 1 bis 8 C-Atomen, vorzugsweise von Ethanol, Butanol oder Ethylhexanol, ableiten sowie reaktive Comonomere wie Acrylsäure, Methacrylsäure, Maleinsäure, Maleinsäureanhydrid oder Glycidyl(meth-)acrylat und weiterhin Vinylester, insbesondere Vinylacetat, als geeignet erwiesen. Mischungen verschiedener Comonomere können ebenfalls eingesetzt werden. Als besonders geeignet haben sich Ethylencopolymere mit Ethyl- oder Butylacrylat und Acrylsäure und/oder Maleinsäureanhydrid als Comonomeren erwiesen.

Die Copolymeren können in einem Hochdruckprozeß bei einem Druck von 400 bis 4500 bar oder durch Pfropfen der Comonomeren auf das Poly-α-Olefin hergestellt werden. Der Anteil des α-Olefins an dem Copolymeren liegt i.a. im Bereich von 99,95 bis 55 Gew.-%.

### Polyamide als thermoplastische Polymere

Bevorzugt werden in die zweite, dritte und vierte Verfahrensstufe, besonders bevorzugt in die dritte und vierte Stufe, Polyamide als thermoplastische Polymere, hergestellt aus Dicarbonsäuren, wie Alkandicarbonsäuren mit 6 bis 12 Kohlenstoffatomen, insbesondere 6 bis 10 Kohlenstoffatomen, wie Adipinsäure, Pimelinsäure, Korksäure, Azelainsäure oder Sebazinsäure sowie Terephthalsäure und Isophthalsäure und Diaminen wie C₄₋₁₂-Alkyldiamine, insbesondere mit 4 bis 8 Kohlenstoffatomen wie Hexamethylendiamin, Tetramethylendiamin oder Octamethylendiamin, ferner m-Xylylendiamin, Bis-(4-aminophenyl)methan, Bis-(4-aminophenyl)-propan-2,2 oder Bis-(4-aminocyclo-hexyl)methan in beliebigen Kombinationen, im Verhältnis zueinander jedoch vorteilhaft im äquivalenten Verhältnis wie Hexamethylendiammoniumadipat, Hexamethylendiammoniumterephthalat oder Tetramethylendiammoniumadipat, bevorzugt Hexamethylendiammoniumadipat und Hexamethylendiammoniumterephthalat, zugeführt.

Bevorzugt sind insbesondere Polyamide, die aus Hexamethylendiamin sowie Adipinsäure, Isophthalsäure und/oder Terephthalsäure aufgebaut sind.

Das erfindungsgemäße Verfahren umfaßt 3 oder 4 Stufen, wobei die thermoplastischen Polymere dem Reaktionsgemisch in allen Verfahrensstufen zugeführt werden können, während weitere polyamidbildende Monomere bevorzugt in den Verfahrensstufen 1 bis 3 zugesetzt werden. Zudem können dem Polymergemisch bevorzugt in der dritten und vierten Verfahrensstufe weitere Polyamide zugemischt werden.

Im allgemeinen verwendet man von 30 bis 100, bevorzugt von 35 bis 100 Gew.-%, bezogen auf die Gesamtmenge an Monomere (polyamidbildende Monomere b und Aminonitrile), an Aminonitrilen und von 0 bis 70, bevorzugt von 0 bis 65 Gew.-%, bezogen auf die Gesamtmenge an Monomeren, der weiteren polyamidbildenen Monomere. AH-Salz wird üblicherweise als wäßrige Lösung eingesetzt, deren Konzentration im allgemeinen von 30 bis 75, bevorzugt von 35 bis 70 Gew.-%, bezogen auf die wäßrige Lösung, beträgt. In der Regel wählt man das Gewichtsverhältnis von Aminonitrilen zu AH-Salz im Bereich von 4:1 bis 20:1, bevorzugt im Bereich von 5:1 bis 15:1.

Der Anteil der thermoplastischen Polymeren im Reaktionsgemisch an der Lösung beträgt in der Regel von 1 bis 75 Gew.-%. Entsprechend beträgt der Anteil der Summe aus Aminonitrilen und polyamidbildenden Monomeren 25 bis 99 Gew-%. Bevorzugt enthält das Gemisch von 2 bis 75, insbesondere von 3 bis 70 Gew.-% der thermoplastischen Polymeren und von 25 bis 98, insbesondere von 30 bis 97 Gew.-% der Gesamtmenge aus Aminonitrilen und polyamidbildenden Monomeren.

Erfindungsgemäß wird in einer ersten Stufe (Stufe 1) mindestens ein Aminonitril mit Wasser, bei einer Temperatur von ungefähr 90 bis ungefähr 400°C, vorzugsweise ungefähr 180 bis ungefähr 310°C und insbesondere bei ungefähr 220 bis ungefähr 270°C erhitzt, wobei ein Druck von ungefähr 0,1 bis ungefähr 15 x 10⁶ Pa, vorzugsweise ungefähr 1 bis ungefähr 10 x 10⁶ Pa und insbesondere ungefähr 4 bis ungefähr 9 x 10⁶ Pa eingestellt wird. Dabei können in dieser Stufe Druck und Temperatur so aufeinander abgestimmt werden, daß eine flüssige oder eine feste Phase und ein Gemisch aus flüssiger oder fester Phase und eine gasförmige Phase erhalten werden.

Je nach Schmelzpunkt der polyamidbildenden Monomeren werden die thermopastischen Polymere bei Temperaturen im Bereich von 50 bis 300°C, bevorzugt im Bereich von 80 bis 290°C in Aminonitril und weiteren polyamidbildenden Monomeren gelöst. Um eine möglichst gute Durchmischung der Lösungsbestandteile zu erhalten, werden die Mischungen vorteilhafterweise gerührt. Hierzu eignen sich z.B. Rührkessel. Anschließend wird im allgemeinen das Wasser auf einmal, in Portionen oder kontinuierlich zugegeben. Die Temperatur der Lösung wird entweder gleichzeitig oder anschließend in der Regel auf 180 bis 330°C, bevorzugt auf 220°C bis 310°C erhöht. Die Lösung kann entweder in dem Aggregat verbleiben, in dem sie hergestellt wurde oder - insbesondere im Fall der kontinuierlichen Umsetzung - vor oder nach der Temperaturerhöhung oder vor oder nach der Wasserzugabe in ein anderes Reaktionsgefäß überführt werden.

Erfindungsgemäß setzt man Wasser in einem Molverhältnis von Aminoalkylnitril zu Wasser im Bereich von 1:1 bis 1:30, besonders bevorzugt von 1:2 bis 1:8, ganz besonders bevorzugt von 1:2 bis 1:6, ein, wobei der Einsatz von Wasser im Überschuß, bezogen auf das eingesetzte Aminoalkylnitril, bevorzugt ist.

Bei dieser Ausführungsform entspricht die flüssige oder feste Phase oder das Gemisch aus flüssiger und fester Phase dem Umsetzungsgemisch, während die gasförmige Phase abgetrennt wird. Dabei kann im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch kann zweiphasig flüssig-gasförmig, fest-gasförmig oder flüssig/fest-gasförmig vorliegen. Selbstverständlich können Druck und Temperatur auch so aufeinander abgestimmt werden, daß das Reaktionsgemisch einphasig-fest oder - flüssig vorliegt.

Die Abtrennung der Gasphase kann durch den Einsatz von gerührten oder nichtgerührten Abscheidekesseln oder Kesselkaskaden sowie durch den Einsatz von Verdampferapparaten erfolgen, z.B. durch Umlaufverdampfer oder Dünnschichtverdampfer, wie z.B. durch Filmextruder oder durch Ringscheibenreaktoren, die eine vergrößerte Phasengrenzfläche garantieren. Gegebenenfalls ist ein Umpumpen der Reaktionsmischung bzw. der Einsatz eines Schlaufenreaktors notwendig, um die Phasengrenzfläche zu vergrößern. Des weiteren kann die Abtrennung der Gasphase durch die Zugabe von Wasserdampf oder Inertgas in die flüssige Phase gefördert werden.

Bevorzugt wird bei einer vorgewählten Temperatur der Druck so eingestellt, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

Bevorzugt wird bei der zweiphasigen Fahrweise ein Druck gewählt, der größer ist als der zur Massetemperatur der Reaktionsmischung gehörende Dampfdruck von reinem Wasser, jedoch kleiner als der Gleichgewichtsdampfdruck von Ammoniak.

In Stufe 1 können Rührkessel, Strömungsrohre oder Kesselkaskaden eingesetzt werden. Bei einer zweiphasigen Fahrweise wird der Einsatz von Kesseln oder einer Reaktionskolonne bevorzugt, während bei einer einphasig-flüssigen Fahrweise als bevorzugte Ausführungsform ein Strömungsrohr, versehen mit Füllkörpern, einzusetzen ist. Der Einsatz eines Rohrbündelreaktors, wahlweise mit Füllkörpern ausgerüstet, in der ersten Verfahrensstufe ist ebenfalls möglich und insbesondere bei einer zweiphasigen Fahrweise vorteilhaft, um den Wärmeaustausch zu verbessern und die axiale Rückvermischung der Reaktanden weiter zu verringern.

Als Füllkörper können z.B. Raschig-Ringe oder Sulzer-Mischelemente verwendet werden, um eine schmale Verweilzeitverteilung zu gewährleisten und um die Rückvermischung zu begrenzen.

In einer weiteren Ausführungsform wird der Reaktor der ersten Stufe von oben nach unten durchströmt, wobei dieser wiederum bevorzugt mit Füllkörpern versehen ist, die eine axiale Rückvermischung der Reaktanden einschränken. Hierdurch erreicht das im Reaktor freiwerdende Ammoniak-Gas, welches vorwiegend direkt nach dem Eintritt in den Reaktor ensteht, auf kürzestem Weg die Gasphase am Kopf des Reaktors. Die Störung des Strömungsprofils im weiteren Verlauf des Reaktors durch aufsteigende Gasblasen bzw. Konvektion ist deshalb gering.

In einer besonders bevorzugten Ausführungsform der zweiphasigen Fahrweise wird ein senkrecht stehendes Strömungsrohr eingesetzt, das von unten nach oben durchströmt wird und oberhalb des Produktausgangs eine weitere Öffnung zur Gasphasenabtrennung aufweist. Dieser Rohrreaktor kann vollständig oder teilweise mit Katalysatorgranulat gefüllt sein. In einer bevorzugten Ausführungsform ist der senkrecht stehende Reaktor bei zweiphasiger Fahrweise maximal bis zur Phasengrenze mit Katalysatormaterial gefüllt.

In einer anderen, besonders bevorzugten Ausführungsform der ersten Stufe wird der Druck so gewählt, daß das Reaktionsgemisch einphasig flüssig vorliegt, d.h. im Reaktor keine Gasphase vorhanden ist. Bei dieser einphasigen Fahrweise ist die bevorzugte Ausführungsform ein Strömungsrohr, gefüllt ausschließlich mit Katalysatormaterial.

In einer weiteren bevorzugten Ausführungsform wird das Aminonitril/Wassergemisch kontinuierlich mit Hilfe eines Wärmetauschers erhitzt und das so erwärmte Gemisch zusammen mit thermoplastischen Polymeren und polyamidbildenden Monomeren in ein auf die gleiche Temperatur temperiertes Reaktionsgefäß, vorzugsweise ein Rohr, das ggf. Einbauten wie Sulzer-Mischelemente enthalten kann, um Rückvermischungen zu vermeiden, eingeführt. Selbstverständlich können das Aminonitril/Wassergemisch auch getrennt von den thermoplastischen Polymeren und weiteren Monomeren aufgeheizt und anschließend im Reaktor vermischt werden.

Bzgl. der Verweilzeit des Reaktionsgemischs in der ersten Stufe bestehen keinerlei Beschränkungen; sie wird jedoch im allgemeinen im Bereich von ungefähr 10 Minuten bis ungefähr 10 Stunden, vorzugsweise zwischen ungefähr 10 Minuten und ungefähr 6 Stunden gewählt.

Obwohl auch bzgl. des Umsatzes an Nitrilgruppen in Stufe 1 keinerlei Beschränkungen existieren, beträgt insbesondere aus wirtschaftlichen Gründen der Umsatz an Nitrilgruppen in Stufe 1 im allgemeinen nicht weniger als ungefähr 70 mol-%, vorzugsweise mindestens ungefähr 95 mol-% und insbesondere ungefähr 97 bis ungefähr 99 mol-%, jeweils bezogen auf die Molzahl an eingesetztem Aminonitril.

Den Umsatz an Nitrilgruppen ermittelt man üblicherweise mittels IR-Spektroskopie (CN-Valenz-Schwingung bei 2247 Wellenzahlen), Raman-Spektroskopie, NMR oder HPLC, bevorzugt durch IR-Spektroskopie.

Weiterhin ist es erfindungsgemäß nicht ausgeschlossen, die Umsetzung in Stufe 1 (und den anderen Stufen, speziell Stufen 2 und/oder 3) auch in Gegenwart von sauerstoffhaltigen Phosphorverbindungen, insbesondere Phosphorsäure, phosphoriger Säure und hypophosphoriger Säure sowie deren Alkalimetall- und Erdalkalimetallsalzen und Ammoniumsalzen wie Na₃PO₄, NaH₂PO₄, Na₂HPO₄, NaH₂PO₃, Na₂HPO₃, NaH₂PO₂, K₃PO₄, KH₂PO₄, K₂HPO₄, KH₂PO₃, K₂HPO₃, KH₂PO₂ durchzuführen, wobei man das Molverhältnis von ω-Aminonitril zu Phosphorverbindungen im Bereich von 0,01:1 bis 1:1, bevorzugt von 0,01:1 bis 0,1:1 wählt. Zudem kann ein wie nachstehend beschriebener Katalysator eingesetzt werden.

Die Umsetzung kann in Stufe 1 in einem Strömungsrohr durchgeführt werden, das einen Brönsted-Säurekatalysator, ausgewählt aus einem Beta-Zeolith-, Schichtsilikat- oder einem Titandioxid-Katalysator aus 70 bis 100 Gew.-% Anatas und 0 - 30 Gew.-% Rutil, in dem bis zu 40 Gew.-% des Titandioxids durch Wolframoxid ersetzt sein können, enthält. Wird ein sehr reines Aminonitril eingesetzt, so sollte der Anteil an Anatas im Titandioxid-Katalysator möglichst hoch sein. Vorzugsweise wird ein reiner Anatas-Katalysator eingesetzt. Enthält das eingesetzte Aminonitril Verunreinigungen, beispielsweise 1 bis 3 Gew.-% an Verunreinigungen, so wird vorzugsweise ein Titandioxid-Katalysator eingesetzt, der ein Gemisch aus Anatas und Rutil enthält. Vorzugsweise beträgt der Anteil an Anatas 70 bis 80 Gew.-% und der Anteil an Rutil 20 bis 30 Gew.-%. Besonders bevorzugt wird in diesem Fall ein Titandioxid-Katalysator aus etwa 70 Gew.-% Anatas und etwa 30 Gew.-% Rutil eingesetzt. Der Katalysator weist vorzugsweise ein Porenvolumen von 0,1 bis 5 ml/g, besonders bevorzugt 0,2 bis 0,5 ml/g auf. Der mittlere Porendurchmesser beträgt vorzugsweise 0,005 bis 0,1 mm, besonders bevorzugt 0,01 bis 0,06 mm. Wird mit hochviskosen Produkten gearbeitet, sollte der mittlere Porendurchmesser groß gewählt werden. Die Schneidhärte ist vorzugsweise größer 20 N, besonders bevorzugt > 25 N. Die BET-Oberfläche beträgt vorzugsweise mehr als 40 m²/g, besonders bevorzugt mehr als 100 m²/g. Bei einer kleiner gewählten BET-Oberfläche sollte das Schüttvolumen entsprechend höher gewählt werden, um eine ausreichende Katalysatorwirkung zu gewährleisten. Besonders bevorzugte Katalysatoren weisen folgende Eigenschaften auf: 100 % Anatas; 0,3 ml/g Porenvolumen; 0,02 mm mittlerer Porendurchmesser; 32 N Schneidhärte; 116 m²/g BET-Oberfläche oder 84 Gew.-% Anatas; 16 Gew.-% Rutil; 0,3 ml/g Porenvolumen; 0,03 mm mittlerer Porendurchmesser; 26 N Schneidhärte; 46 m²/g BET-Oberfläche. Die Katalysatoren können dabei aus handelsüblichen Pulvern, wie sie beispielsweise von Degussa, Finnti oder Kemira angeboten werden, hergestellt werden. Beim Einsatz eines Anteils an Wolframoxid werden bis zu 40 Gew.-%, vorzugsweise bis zu 30 Gew.-%, besonders bevorzugt 15 bis 25 Gew.-% des Titandioxids durch Wolframoxid ersetzt. Die Konfektionierung der Katalysatoren kann wie in Ertl, Knözinger, Weitkamp: "Handbook of heterogeous catalysis", VCH Weinheim, 1997, Seiten 98ff beschrieben erfolgen. Der Katalysator kann in jeder beliebigen geeigneten Form eingesetzt werden. Vorzugsweise wird er in Form von Formkörpern, Strängen, Granulat beschichteten Füllkörpern oder Einbauten, insbesondere von Granulat eingesetzt. Das Granulat ist dabei vorzugsweise so groß, daß es vom Produktgemisch gut abtrennbar ist und bei der Umsetzung die Fließfähigkeit des Produkts nicht beeinträchtigt.

Durch die Granulatform des Katalysators ist es möglich, ihn am Austrag der ersten Stufe mechanisch abzutrennen. Beispielsweise werden dazu mechanische Filter oder Siebe am Austrag der ersten Stufe vorgesehen. Wird der Katalysator zudem in der zweiten und/oder dritten Stufe ebenfalls verwendet, so liegt er vorzugsweise in der gleichen Form vor.

Erfindungsgemäß wird das in der ersten Stufe erhaltene Umsetzungsgemisch in Stufe 2 bei einer Temperatur von ungefähr 200 (150) bis ungefähr 350 (400)°C, vorzugsweise einer Temperatur im Bereich von ungefähr 210 (200) bis ungefähr 330 (330)°C und insbesondere im Bereich von ungefähr 230 (230) bis ungefähr 270 (290)°C und einem Druck, der niedriger ist als der Druck in Stufe 1 weiter umgesetzt. Vorzugsweise ist der Druck in der zweiten Stufe mindestens ungefähr 0,5 x 10⁶ Pa niedriger als der Druck in Stufe 1, wobei im allgemeinen der Druck im Bereich von ungefähr 0,1 bis ungefähr 45 x 10⁶ Pa, vorzugsweise ungefähr 0,5 bis ungefähr 15 x 10⁶ Pa und insbesondere ungefähr 2 bis ungefähr 6 x 10⁶ Pa liegt (Werte in Klammern: ohne Katalysator).

Dabei werden in Stufe 2 die Temperatur und der Druck so gewählt, daß eine erste Gasphase und eine erste flüssige oder erste feste Phase oder ein Gemisch aus erster flüssiger und erster fester Phase erhalten werden, und die erste Gasphase von der ersten flüssigen oder ersten festen Phase oder dem Gemisch aus erster flüssiger und erster fester Phase abgetrennt wird.

Die erste gasförmige Phase, die im wesentlichen aus Ammoniak und Wasserdampf besteht, entfernt man im allgemeinen kontinuierlich mit Hilfe einer Destillationsvorrichtung, wie einer Destillationskolonne. Die bei dieser Destillation ggf. mitabgeschiedenen organischen Bestandteile des Destillats, im überwiegendem Maße nicht umgesetztes Aminonitril, können in Stufe 1 und/oder Stufe 2 vollständig oder teilweise zurückgeführt werden.

Die Verweilzeit des Umsetzungsgemisches in Stufe 2 unterliegt keinerlei Beschränkungen, beträgt jedoch im allgemeinen ungefähr 10 Minuten bis ungefähr 5 Stunden, vorzugsweise ungefähr 30 Minuten bis ungefähr 3 Stunden.

Die Produktleitung zwischen der ersten und zweiten Stufe enthält ggf. Füllkörper, wie Raschig-Ringe oder Sulzer-Mischelemente, die eine kontrollierte Entspannung des Umsetzungsgemischs in die Gasphase ermöglichen. Dies trifft insbesondere auf die einphasige Betriebsweise zu.

Gewünschtenfalls können dem Umsetzungsgemisch aus der 1. Stufe weitere thermoplastische Polymere und/oder polyamidbildende Monomere, vorzugsweise kontinuierlich und in der flüssigen Phase, zudosiert werden.

Vorzugsweise enthält auch der Reaktor der zweiten Stufe das erfindungsgemäße Katalysatormaterial, insbesondere in Granulatforrn. Es wurde gefunden, daß der Reaktor im Vergleich zu einem katalysatorfreien Reaktor insbesondere bei höheren Drücken und/oder bei einem großen Wasserüberschuß in der Reaktionsmischung eine weitere Verbesserung der Produkteigenschaften ermöglicht. Temperatur und Druck sollten so gewählt sein, daß die Viskosität der Reaktionsmischung klein genug bleibt, um eine Verstopfung der Katalysatoroberfläche zu vermeiden. Erfindungsgemäß werden auch am Austrag der zweiten Verfahrensstufe Siebe oder Filter eingesetzt, die die Reinheit der Reaktionsmischung garantieren und den Katalysator von der Reaktionsmischung trennen.

In Stufe 3 wird die erste flüssige oder die erste feste Phase oder das Gemisch aus erster flüssiger und erster fester Phase mit einer gasförmigen oder flüssigen Phase, die Wasser enthält, vorzugsweise Wasser oder Wasserdampf, mit Wasser, bei einer Temperatur von ungefähr 90 bis ungefähr 400°C, vorzugsweise ungefähr 180 bis ungefähr 310°C und insbesondere bei ungefähr 220 bis ungefähr 270°C erhitzt, wobei ein Druck von ungefähr 0,1 bis ungefähr 15 x 10⁶ Pa, vorzugsweise ungefähr 1 bis ungefähr 10 x 10⁶ Pa und insbesondere ungefähr 4 bis ungefähr 9 x 10⁶ Pa eingestellt wird, versetzt. Dies geschieht vorzugsweise kontinuierlich. Die Menge an zugegebenem Wasser (als Flüssigkeit) liegt vorzugsweise im Bereich von ungefähr 50 bis ungefähr 1500 ml, weiter bevorzugt ungefähr 100 bis ungefähr 500 ml, jeweils bezogen auf 1 kg der ersten flüssigen oder ersten festen Phase oder des Gemischs aus erster flüssiger und erster fester Phase, sofern kein thermoplastisches Polymer zugesetzt wird. Durch diesen Wasserzusatz werden in erster Linie die in der Stufe 2 verursachten Wasserverluste kompensiert und die Hydrolyse von Säureamidgruppen im Reaktionsgemisch gefördert. Daraus resultiert als weiterer Vorteil dieser Erfindung, daß das Gemisch der Ausgangsprodukte, wie es in Stufe 1 eingesetzt wird, lediglich mit einem kleinen Wasserübschuß eingesetzt werden kann.

Werden der 3. Stufe neben Wasser thermoplastische Polymere und polyamidbildende Monomere zugesetzt, so hängt die zugegebene Wassermenge von der Wasserlöslichkeit und der Menge der zugesetzten thermoplastischen Polymeren ab. Je nach Schmelzpunkt der eingesetzten Komponenten werden die thermoplastischen Polymere und die Monomere in die flüssige Phase überführt und auf die geforderte Temperatur überführt und gewünschtenfalls mit Wasser vermischt. Um eine möglichst gute Durchmischung zu erhalten, werden die Mischungen vorteilhafterweise gerührt. Hierzu eignen sich z.B. Rührkessel. Die Lösung wird dann vorzugsweise auf die geforderte Reaktionstemperatur der dritten Verfahrensstufe gebracht und anschließend mit der ersten flüssigen oder der ersten festen Phase oder dem Gemisch aus erster fester und erster flüssiger Phase vermischt. Dabei können ggf.

Mischelemente im Reaktor eingesetzt werden, die die Durchmischung der Komponenten fördern.

Stufe 3 kann bei einer Temperatur von 150 bis 370°C und einem Druck von 0,1 bis 30 x 10⁶ Pa betrieben werden, beim Vorliegen einer erfindungsgemäßen Katalysatorschüttung können die für Stufe 1 geltenden Bedingungen angewendet werden. Die Temperatur beträgt sonst vorzugsweise 180 bis 300°C, besonders bevorzugt 220 bis 280°C. Der Druck beträgt vorzugsweise 1 bis 10 x 10⁶ Pa, besonders bevorzugt 2 x 10⁶ bis 7 x 10⁶ Pa.

Dabei können Druck und Temperatur so aufeinander abgestimmt werden, daß das Reaktionsgemisch einphasig-flüsssig oder einphasig-fest vorliegt. In einer anderen Ausführungsform werden Druck und Temperatur so gewählt, daß eine flüssige oder eine feste Phase oder ein Gemisch aus fester und flüssiger Phase sowie eine gasförmige Phase erhalten werden. Bei dieser Ausführungsform entspricht die flüssige oder feste Phase oder das Gemisch aus flüssiger und fester Phase dem Produktgemisch, während die gasförmige Phase abgetrennt wird. Dabei können im Rahmen dieser Stufe die gasförmige Phase sofort von der flüssigen oder festen Phase oder dem Gemisch aus fester oder flüssiger Phase abgetrennt werden, oder das sich innerhalb dieser Stufe bildende Reaktionsgemisch zweiphasig flüssig-gasförmig, fest-gasförmig oder flüssig/fest-gasförmig vorliegen.

Bei einer vorgewählten Temperatur kann der Druck so eingestellt werden, daß er kleiner ist als der Gleichgewichtsdampfdruck von Ammoniak, jedoch größer als der Gleichgewichtsdampfdruck der übrigen Komponenten im Reaktionsgemisch bei der vorgegebenen Temperatur. Auf diese Weise kann insbesondere die Abscheidung von Ammoniak begünstigt und somit die Hydrolyse der Säureamidgruppen beschleunigt werden.

Die in dieser Stufe einsetzbaren Apparaturen/Reaktoren können mit denen der Stufe 1, wie oben diskutiert, identisch sein.

Die Verweilzeit in dieser Stufe unterliegt ebenfalls keinen Beschränkungen, aus wirtschaftlichen Gründen wählt man sie jedoch im allgemeinen im Bereich zwischen ungefähr 10 Minuten bis ungefähr 10 Stunden, vorzugsweise zwischen ungefähr 60 bis ungefähr 8 Stunden, besonders bevorzugt ungefähr 60 Minuten bis ungefähr 6 Stunden.

Das in Stufe 3 erhaltene Produktgemisch kann dann, wie weiter unten beschrieben, weiterverarbeitet werden.

In einer bevorzugten Ausführungsform wird das Produktgemisch der Stufe 3 in einer vierten Stufe einer Nachkondensation bei einer Temperatur von ungefähr 200 bis ungefähr 350°C, vorzugsweise einer Temperatur von ungefähr 220 bis 300°C und insbesondere ungefähr 240 bis 270°C unterworfen. Stufe 4 wird bei einem Druck durchgeführt, der unterhalb des Drucks der Stufe 3 liegt, und vorzugsweise in einem Bereich von ungefähr 5 bis 1000 x 10³ Pa, weiter bevorzugt ungefähr 10 bis ungefähr 300 x 10³ Pa liegt. Im Rahmen dieser Stufe werden Temperatur und Druck so gewählt, daß eine zweite Gasphase und eine zweite flüssige oder feste Phase oder ein Gemisch aus zweiter flüssiger und zweiter fester Phase, die das Polyamid enthalten, erhalten werden.

Erfindungsgemäß kann die Umsetzung des Reaktionsgemisches in der vierten Stufe ebenfalls in Gegenwart von neu zugeführten thermoplastischen Polymeren erfolgen. Je nach Schmelzpunkt werden die thermoplastischen Polymere bei Temperaturen im Bereich von 50 bis 300°C, bevorzugt im Bereich von 80 bis 290°C, in die flüssige Phase überführt. Hierzu eignen sich z.B. Rührkessel als Vorlagetanks. Die Lösung wird dann vorzugsweise auf die geforderte Reaktionstemperatur der vierten Verfahrensstufe geheizt und anschließend zusammen mit der flüssigen oder der festen Phase oder dem Gemisch aus fester und flüssiger Phase des Reaktionsaustrags aus der dritten oder zweiten Reaktionsstufe vermischt. Dabei können ggf. Mischelemente eingesetzt werden, die die Durchmischung der Komponenten fördern. In einer anderen Ausführungsform werden die thermoplastischen Polymeren in flüssiger oder fester Form getrennt vom Produktaustrag der dritten Stufe in den Reaktor der vierten Stufe eingetragen und dort z.B. mit Hilfe eines Rührers vermischt.

Vorzugsweise wird die Nachkondensation gemäß Stufe 4 so durchgeführt, daß die relative Viskosität (gemessen bei einer Temperatur von 25°C und einer Konzentration von 1 g Polymer pro 100 ml in 96 Gew.-%iger Schwefelsäure) des Polyamids einen Wert im Bereich von ungefähr 1,6 bis ungefähr 3,5 einnimmt.

In einer bevorzugten Ausführungsform kann man aus der flüssigen Phase gegebenenfalls vorhandenes Wasser mittels eines Inertgases wie Stickstoff austreiben.

Die Verweilzeit des Reaktionsgemischs in Stufe 4 richtet sich insbesondere nach der gewünschten relativen Viskosität, der Temperatur, dem Druck und der in Stufe 3 zugesetzten Wassermenge.

Wird die Stufe 3 einphasig betrieben, so können in der Produktleitung zwischen der Stufe 3 und der Stufe 4 ggf. Füllkörper, bestehend z.B. aus Raschig-Ringen oder Sulzer-Mischelementen, eingesetzt werden, welche eine kontrollierte Entspannung des Reaktionsgemischs in der Gasphase ermöglichen.

Auch die vierte Stufe kann mit dem erfindungsgemäßen Katalysator betrieben werden. Es wurde gefunden, daß der Einsatz des Katalysators in der Verfahrensstufe 4 insbesondere dann den Molekulargewichtsaufbau verbessert, wenn die relative Viskosität des Austrags aus der dritten oder - im Falle der dreistufigen Fahrweise - zweiten Stufe kleiner ist als RV = 1,6 - und/oder der molare Nitrilgruppen- und Säureamidgehalt im Polymer größer als 1 % ist, jeweils bezogen auf die Molzahl an eingesetztem Aminonitril.

In einer weiteren Ausführmgsform kann erfindungsgemäß auf Stufe 3 verzichtet werden und zur Herstellung des Polyamids die Stufen (1), (2) und (4) ausgeführt werden.

Die oben beschriebenen Verfahren, d.h. die erfindungsgemäße Abfolge der Stufen (1) bis (3) oder (1), (2) und (4) oder (1) bis (4) kann entweder diskontinuierlich, d.h. in einem Reaktor zeitlich nacheinander, oder kontinuierlich, d.h. in aufeinanderfolgenden Reaktoren zur gleichen Zeit, durchgeführt werden. Selbstverständlich ist es auch möglich, einen Teil der Stufen, beispielsweise Stufen (1) und (2) kontinuierlich und die restlich(n) Stufe(n) diskontinuierlich auszuführen.

In einer weiteren bevorzugten Ausführungsform der vorliegenden Erfindung kann mindestens eine der in den jeweiligen Stufen erhaltenen Gasphasen in mindestens eine der vorhergehenden Stufen zurückgeführt werden.

Es ist weiterhin bevorzugt, daß in Stufe 1 oder in Stufe 3 oder sowohl in Stufe 1 als auch in Stufe 3 die Temperatur und der Druck so gewählt werden, daß eine flüssige oder eine feste Phase oder ein Gemisch aus flüssiger und fester Phase und eine gasförmige Phase erhalten werden, und die gasförmige Phase abgetrennt wird.

Erfindungsgemäß ist in sämtlichen Stufen, in denen Polymere vorliegen, für eine gute Durchmischung der Polymeren und Monomeren zu sorgen. Insbesondere in den Stufen 2 und 4 ist der Einsatz von Apparaten, wie z.B. Rührer, die eine starke Scherung der Reaktionsmischung hervorrufen, besonders bevorzugt.

Femer kann man im Rahmen des erfindungsgemäßen Verfahrens auch eine Kettenverlängerung oder eine Verzweigung oder eine Kombination aus beidem durchführen. Dazu werden dem Fachmann bekannte Substanzen zur Verzweigung bzw. Kettenverlängerung von Polymeren in den einzelnen Stufen zugesetzt. Vorzugsweise werden diese Substanzen in Stufe 3 oder 4 zugesetzt.

Als einsetzbare Substanzen sind zu nennen:
Trifunktionelle Amine oder Carbonsäuren als Verzweiger bzw. Vernetzer. Beispiele geeigneter mindestens trifunktioneller Amine oder Carbonsäuren sind beschrieben in der EP-A-0 345 648. Die mindestens trifunktionellen Amine weisen mindestens drei Aminogruppen auf, die zur Umsetzung mit Carbonsäuregruppen fähig sind. Sie weisen vorzugsweise keine Carbonsäuregruppen auf. Die mindestens trifunktionellen Carbonsäuren weisen mindestens drei zur Umsetzung mit Aminen befähigte Carbonsäuregruppen auf, die beispielsweise auch in Form ihrer Derivate, wie Ester, vorliegen können. Die Carbonsäuren weisen vorzugsweise keine zur Reaktion mit Carbonsäuregruppen befähigten Aminogruppen auf. Beispiele geeigneter Carbonsäuren sind Trimesinsäure, trimerisierte Fettsäuren, die beispielsweise aus Ölsäure hergestellt sein können und 50 bis 60 C-Atome aufweisen können, Naphthalinpolycarbonsäuren, wie Naphthalin-1,3,5,7-tetracarbonsäure. Vorzugsweise sind die Carbonsäuren definierte organische Verbindungen und keine polymeren Verbindungen.
Amine mit mindestens 3 Aminogruppen sind beispielsweise Nitrilotrialkylamin, insbesondere Nitrilotriethanamin, Dialkylentriamine, insbesondere Diethylentriamin, Trialkylentetramine und Tetraalkylenpentamine, wobei die Alkylenreste vorzugsweise Ethylenreste sind. Weiterhin können als Amine Dendrimere verwendet werden. Vorzugsweise weisen die Dendrimere die allgemeine Formel I auf

   (R₂N-(CH₂)ₙ)₂N-(CH₂)ₓ-N((CH₂)ₙ-NR₂)₂ (I)

   in der
   R H oder -(CH₂)ₙ-NR¹₂ mit
   R¹ H oder -(CH₂)ₙ-NR²₂ mit
   R². H oder -(CH₂)ₙ-NR³₂ mit
   R³ H oder -(CH₂)ₙ-NH₂ ist,
   n einen ganzzahligen Wert von 2 bis 6 hat und
   x einen ganzzahligen Wert von 2 bis 14 hat.

Vorzugsweise weist n einen ganzzahligen Wert von 3 oder 4, insbesondere 3 und x einen ganzzahligen Wert von 2 bis 6, vorzugsweise von 2 bis 4, insbesondere 2 auf. Die Reste R können auch unabhängig voneinander die angegebenen Bedeutungen haben. Vorzugsweise ist der Rest R ein Wasserstoffatom oder ein Rest -(CH₂)ₙ-NH₂.

Geeignete Carbonsäuren sind solche mit 3 bis 10 Carbonsäuregruppen, vorzugsweise 3 oder 4 Carbonsäuregruppen. Bevorzugte Carbonsäuren sind solche mit aromatischen und/oder heterocyclischen Kernen. Beispiele sind Benzyl-, Naphthyl-, Anthracen-, Biphenyl-, Triphenylreste oder Heterocyclen wie Pyridin, Bipyridin, Pyrrol, Indol, Furan, Thiophen, Purin, Chinolin, Phenanthren, Porphyrin, Phthalocyanin, Naphthalocyanin. Bevorzugt sind 3,5,3',5'-Biphenyltetracarbonsäure-Phthalocyanin, Naphthalocyanin, 3,5,5',5'-Biphenyltetracarbonsäure, 1,3,5,7-Naphthalintetracarbonsäure, 2,4,6-Pyridintricarbonsäure, 3,5,3'5'-Bipyridyltetracarbonsäure, 3,5,3'5'-Benzophenontetracarbonsäure, 1,3,6,8-Akridintetracarbonsäure, besonders bevorzugt 1,3,5-Benzoltricarbonsäure (Trimesinsäure) und 1,2,4,5-Benzoltetracarbonsäure. Derartige Verbindungen sind technisch erhältlich oder können nach dem in der DE-A-43 12 182 beschriebenen Verfahren hergestellt werden. Bei der Verwendung von ortho-substituierten aromatischen Verbindungen wird vorzugsweise eine Imidbildung durch Wahl geeigneter Umsetzungstemperaturen verhindert.

Diese Substanzen sind mindestens trifunktionell, vorzugsweise mindestens tetrafunktionell. Dabei kann die Anzahl der funktionellen Gruppen 3 bis 16, vorzugsweise 4 bis 10, besonders bevorzugt 4 bis 8 betragen. Es werden in den erfindungsgemäßen Verfahren entweder mindestens trifunktionelle Amine oder mindestens trifunktionelle Carbonsäuren eingesetzt, jedoch keine Gemische aus entsprechenden Aminen und Carbonsäuren. Geringe Mengen an mindestens trifunktionellen Aminen können jedoch in den trifünktionellen Carbonsäuren enthalten sein und umgekehrt.

Die Substanzen liegen in der Menge von 1 bis 50 mmol/g Polyamid, vorzugsweise 1 bis 35, besonders bevorzugt 1 bis 20 mmol/g Polyamid vor. Vorzugsweise sind die Substanzen in einer Menge von 3 bis 150, besonders bevorzugt 5 bis 100, i nsbesondere 10 bis 70 mmol/g Polyamid an Äquivalenten enthalten. Die Äquivalente beziehen sich dabei auf die Anzahl der funktionellen Aminogruppen oder Carbonsäuregruppen.

Difunktionelle Carbonsäuren oder difunktionelle Amine dienen als Kettenverlängerungsmittel. Sie weisen 2 Carbonsäuregruppen auf, die mit Aminogruppen umgesetzt werden können oder 2 Aminogruppen, die mit Carbonsäuren umgesetzt werden können. Die difunktionellen Carbonsäuren oder Amine enthalten außer den Carbonsäuregruppen oder Aminogruppen keine weiteren funktionellen Gruppen, die mit Aminogruppen oder Carbonsäuregruppen reagieren können. Vorzugsweise enthalten sie keine weiteren funktionellen Gruppen. Beispiele geeigneter difunktioneller Amine sind solche, die mit difunktionellen Carbonsäuren Salze bilden. Sie können linear aliphatisch sein, wie C₁₋₁₄-Alkylendiamin, vorzugsweise C₂₋₆-Alkylendiamin, beispielsweise Hexylendiamin. Sie können zudem cycloaliphatisch sein. Beispiele sind Isophorondiamin, Dicycycan, Laromin. Verzweigte aliphatische Diamine sind ebenfalls verwendbar, ein Beispiel ist Vestamin TMD (Trimethylhexamethylendiamin, hergestellt von der Hüls AG). Zudem können sie Diamine sein. Die gesamten Amine können jeweils durch C₁₋₁₂-, vorzugsweise C₁₋₁₄-Alkylreste am Kohlenstoffgerüst substituiert sein.

Difunktionelle Carbonsäuren sind beispielsweise solche, die mit difunkitionellen Diaminen Salze bilden. Es können lineare aliphatische Dicarbonsäuren sein, die vorzugsweise C₄₋₂₀-Dicarbonsäuren sind. Beispiele sind Adipinsäure, Azelainsäure, Sebazinsäure, Suberinsäure. Sie können zudem aromatisch sein. Beispiele sind Isophthalsäure, Terephthalsäure, Naphthalindicarbonsäure, wie auch dimerisierte Fettsäuren.

Die difunktionellen Grundbausteine werden vorzugsweise in Mengen von 1 bis 55, besonders bevorzugt 1 bis 30, insbesondere 1 bis 15 mm/g Polyamid eingesetzt.

Erfindungsgemäß trägt man das in Stufe 3 erhaltene Produktgemisch oder die zweite flüssige oder zweite feste Phase oder das Gemisch aus zweiter flüssiger und zweiter fester Phase (aus Stufe 4), die das Polyamid enthalten, vorzugsweise eine Polymerschmelze, nach üblichen Methoden, beispielsweise mit Hilfe einer Pumpe, aus dem Reaktionsgefäß aus. Anschließend kann man das erhaltene Polyamid nach an sich bekannten Methoden, wie sie z.B. in der DE-A 43 21 683 (S. 3, Z. 54 bis S. 4, Z.3) ausführlich beschrieben sind, aufarbeiten.

In einer bevorzugten Ausführungsform kann man den Gehalt an cyclischem Dimer im erfindungsgemäß erhaltenen Polyamid-6 weiter reduzieren, indem man das Polyamid zuerst mit einer wäßrigen Lösung von Caprolactam und anschließend mit Wasser extrahiert und/oder der Gasphasenextraktion (beispielsweise beschreiben in der EP-A-0 284 968) unterwirft. Die bei dieser Nachbehandlung anfallenden niedermolekularen Bestandteile wie Caprolactam und seine linearen sowie cyclischen Oligomere, kann man in die erste und/oder zweite und/oder dritte Stufe zurückführen.

Dem Ausgangsgemisch und dem Reaktionsgemisch können in allen Stufen Kettenregler, wie aliphatische und aromatische Carbon- und Dicarbonsäuren, und Katalysatoren, wie sauerstoffhaltige Phosphorverbindungen, in Mengen im Bereich von 0,01 bis 5 Gew.-%, bevorzugt von 0,2 bis 3 Gew.-%, bezogen auf die Menge an eingesetzten polyamidbildenden Monomeren und Aminonitrilen, zugesetzt werden. Geeignete Kettenregler sind zum Beispiel Propionsäure, Essigsäure, Benzoesäure, Terephthalsäure sowie Triacetondiamin.

Zusatz- und Füllstoffe wie Pigmente, Farbstoffe und Stabilisatoren werden in der Regel vor dem Granulieren, bevorzugt in der zweiten, dritten und vierten Stufe der Reaktionsmischung zugeführt. Besonders bevorzugt sind Füll- und Zusatzstoffe dann einzusetzen, wenn die Reaktions- bzw. Polymermischung im weiteren Verfahrensablauf nicht mehr in Gegenwart von Festbettkatalysatoren umgesetzt wird. Als Zusatzstoffe können die Zusammensetzungen von 0 bis 40 Gew.-%, bevorzugt von 1 bis 30 Gew.-%, bezogen auf die gesamte Zusammensetzung, eines oder mehrerer schlagzähmodifizierender Kautschuke enthalten.

Es können z.B. übliche Schlagzähmodifier verwendet werden, die für Polyamide und/oder Polyarylenether geeignet sind.

Kautschuke, die die Zähigkeit von Polyamiden erhöhen, weisen im allgemeinen zwei wesentliche Merkmale auf: sie enthalten einen elastomeren Anteil, der eine Glastemperatur von weniger als -10°C, vorzugsweise von weniger als -30°C aufweist, und sie enthalten mindestens eine funktionelle Gruppe, die mit dem Polyamid wechselwirken kann. Geeignete funktionelle Gruppen sind beispielsweise Carbonsäure-, Carbonsäureanhydrid-, Carbonsäureester-, Carbonsäurearnid-, Carbonsäureimid-, Amino-, Hydroxyl-, Epoxid-, Urethan- und Oxazolingruppen.

Als Kautschuke, die die Zähigkeit der Blends erhöhen, seien z.B. folgende genannt:

EP- bzw. EPDM-Kautschuke, die mit den obigen funktionellen Gruppen gepfropft wurden. Geeignete Pfropfreagentien sind beispielsweise Maleinsäureanhydrid, Itaconsäure, Acrylsäure, Glycidylacrylat und Glycidylmethacrylat.

Diese Monomere können in der Schmelze oder in Lösung, gegebenenfalls in Gegenwart eines Radikalstartes wie Cumolhydroperoxid auf das Polymere aufgepropft werden.

Die unter den Polymeren beschriebenen Copolymere von α-Olefinen, darunter insbesondere die Ethylencopolymere können anstelle als Polymere A auch als Kautschuke eingesetzt und den erfindungsgemäßen Zusammensetzungen als solche beigemischt werden.

Als weitere Gruppe von geeigneten Elastomeren sind Kern-Schale-Pfropfkautschuke zu nennen. Hierbei handelt es sich um in Emulsion hergestellte Pfroptkautschuke, die aus mindestens einem harten und einem weichen Bestandteil bestehen. Unter einem harten Bestandteil versteht man üblicherweise ein Polymerisat mit einer Glastemperatur von mindestens 25°C, unter einem weichen Bestandteil ein Polymerisat mit einer Glastemperatur von höchstens 0°C. Diese Produkte weisen eine Struktur aus einem Kern und mindestens einer Schale auf, wobei sich die Struktur durch die Reihenfolge der Monomerenzugabe ergibt. Die weichen Bestandteile leiten sich im allgemeinen von Butadien, Isopren, Alkylacrylaten, Alkylmethacrylaten oder Siloxanen und gegebenenfalls weiteren Comonomeren ab. Geeignete Siloxankerne können beispielsweise ausgehend von cyclischen oligomeren Octamethyltetrasiloxan oder Tetravinyltetramethyltetra-siloxan hergestellt werden. Diese können beispielsweise mit g-Mercapto-propylmethyldimethoxysilan in einer ringöffnenden kationischen Polymerisation, vorzugsweise in Gegenwart von Sulfonsäuren, zu den weichen Siloxankernen umgesetzt werden. Die Siloxane können auch vernetzt werden, indem z.B. die Polymerisationsreaktion in Gegenwart von Silanen mit hydrolysierbaren Gruppen wie Halogen oder Alkoxygruppen wie Tetraethoxysilan, Methyltrimethoxysilan oder Phenyltrimethoxysilan durchgeführt wird. Als geeignete Comonomere sind hier z.B. Styrol, Acrylnitril und vernetzende oder pfropfaktive Monomere mit mehr als einer polymerisierbaren Doppelbindung wie Diallylphthalat, Divinylbenzol, Butandioldiacrylat oder Triallyl(iso)cyanurat zu nennen. Die harten Bestandteile leiten sich im allgemeinen von Styrol, α-Methylstyrol und deren Copolymerisaten ab, wobei hier als Comonomere vorzugsweise Acrylnitril, Methacrylnitril und Methylmethacrylat aufzuführen sind.

Bevorzugte Kern-Schale-Pfropfkautschuke enthalten einen weichen Kern und eine harte Schale oder einen harten Kern, eine erste weiche Schale und mindestens eine weitere harte Schale. Der Einbau von funktionellen Gruppen wie Carbonyl-, Carbonsäure-, Säureanhydrid-, Säureamid-, Säureimid-, Carbonsäureester-, Amino-, Hydroxyl-, Epoxi-, Oxazolin-, Urethan-, Harnstoff-, Lactam- oder Halogenbenzylgruppen, erfolgt hierbei vorzugsweise durch den Zusatz geeignet funktionalisierter Monomere bei der Polymerisation der letzten Schale. Geeignete funktionalisierte Monomere sind beispielsweise Maleinsäure, Maleinsäureanhydrid, Mono- oder Diester oder Maleinsäure, tert-Butyl(meth-)acrylat, Acrylsäure, Glycidyl(meth-)acrylat und Vinyloxazolin. Der Anteil an Monomeren mit funktionellen Gruppen beträgt im allgemeinen 0,1 bis 25 Gew.-%, vorzugsweise 0,25 bis 15 Gew.-%, bezogen auf das Gesamtgewicht des Kern-Schale-Pfropfkautschuks. Das Gewichtsverhältnis von weichen zu harten Bestandteilen beträgt im allgemeinen 1:9 bis 9:1, bevorzugt 3:7 bis 8:2.

Derartige Kautschuke, die die Zähigkeit von Polyamiden erhöhen, sind an sich bekannt und beispielsweise in der EP-A-0 208 187 beschrieben.

Eine weitere Gruppe von geeigneten Schlagzähmodifiem sind thermoplastische Polyester-Elastomere. Unter Polyesterelastomeren werden dabei segmentierte Copolyetherester verstanden, die langkettige Segmente, die sich in der Regel von Poly(alkylen)etherglykolen und kurzkettige Segmente, die sich von niedermolekularen Diolen und Dicarbonsäuren ableiten, enthalten. Derartige Produkte sind an sich bekannt und in der Literatur, z.B. in der US 3,651,014, beschrieben. Auch im Handel sind entsprechende Produkte unter den Bezeichnungen Hytrel® (Du Pont), Arnitel® (Akzo) und Pelprene® (Toyobo Co. Ltd.) erhältlich.

Selbstverständlich können auch Mischungen verschiedener Kautschuke eingesetzt werden.

Als weitere Zusatzstoffe sind beispielsweise Verarbeitungshilfsmittel, Stabilisatoren und Oxidationsverzögerer, Mittel gegen Wärmezersetzung und Zersetzung durch ultraviolettes Licht, Gleit- und Entformungsmittel, Flammschutzmittel, Farbstoffe und Pigmente und Weichmacher zu nennen. Deren Anteil beträgt im allgemeinen bis zu 40, vorzugsweise bis zu 15 Gew.-%, bezogen auf das Gesamtgewicht der Zusammensetzung.

Pigmente und Farbstoffe sind allgemein in Mengen bis zu 4, bevorzugt 0,5 bis 3,5 und insbesondere 0,5 bis 3 Gew.-% enthalten.

Die Pigmente zur Einfärbung von Thermoplasten sind allgemein bekannt, siehe z.B. R. Gächter und H. Müller, Taschenbuch der Kunststoffadditive, Carl Hanser Verlag, 1983, Seiten 494 bis 510. Als erste bevorzugte Gruppe von Pigmenten sind Weißpigmente zu nennen wie Zinkoxid, Zinksulfid, Bleiweiß (2 PbCO₃ Pb(OH)₂), Lithopone, Antimonweiß und Titandioxid. Von den beiden gebräuchlichsten Kristallmodifikationen (Rutil- und Anatas-Typ) des Titandioxids wird insbesondere die Rutilform zur Weißfärbung der erfindungsgemäßen Formmassen verwendet.

Schwarze Farbpigmente, die erfindungsgemäß eingesetzt werden können, sind Eisenoxidschwarz (Fe₃O₄), Spinellschwarz (Cu(Cr,Fe)₂O₄), Manganschwarz (Mischung aus Mangandioxid, Siliciumdioxid und Eisenoxid), Kobaltschwarz und Antimonschwarz sowie besonders bevorzugt Ruß, der meist in Form von Furnace- oder Gasruß eingesetzt wird (siehe hierzu G Benzing, Pigmente für Anstrichmittel, Expert-Verlag (1988), S. 78ff).

Selbstverständlich können zur Einstellung bestimmter Farbtöne anorganische Buntpigmente wie Chromoxidgrün oder organische Buntpigmente wie Azopigmente und Phthalocyanine erfindungsgemäß eingesetzt werden. Derartige Pigmente sind allgemein im Handel üblich.

Weiterhin kann es von Vorteil sein, die genannten Pigmente bzw. Farbstoffe in Mischung einzusetzen, z.B. Ruß mit Kupferphthalocyaninen, da allgemein die Farbdispergierung im Thermoplasten erleichtert wird.

Oxidationsverzögerer und Wärmestabilisatoren, die den thermoplastischen Massen gemäß der Erfindung zugesetzt werden können, sind z.B. Halogenide von Metallen der Gruppe I des Periodensystems, z.B. Natrium-, Kalium-, Lithium-Halogenide, ggf. in Verbindung mit Kupfer-(I)-halogeniden, z.B. Chloriden, Bromiden oder Iodiden. Die Halogenide, insbesondere des Kupfers, können auch noch elektronenreiche p-Liganden enthalten. Als Beispiel für derartige Kupferkomplexe seien Cu-Halogenid-Komplexe mit z.B. Triphenylphosphin genannt. Weiterhin können Zinkfluorid und Zinkchlorid verwendet werden. Femer sind sterisch gehinderte Phenole, Hydrochinone, substituierte Vertreter dieser Gruppe, sekundäre aromatische Amine, gegebenenfalls in Verbindung mit phosphorhaltigen Säuren bzw. deren Salze, und Mischungen dieser Verbindungen, vorzugsweise in Konzentration bis zu 1 Gew.-%, bezogen auf das Gewicht der Mischung, einsetzbar.

Beispiele für UV-Stabilisatoren sind verschiedene substituierte Resorcine, Salicylate, Benzotriazole und Benzophenone, die im allgemeinen in Mengen bis zu 2 Gew.-% eingesetzt werden.

Gleit- und Entformungsmittel, die in der Regel in Mengen bis zu 1 Gew.-% der thermoplastischen Masse zugesetzt werden, sind Stearinsäure, Stearylalkohol, Stearinsäurealkylester und -amide sowie Ester des Pentaerythrits mit langkettigen Fettsäuren. Es können auch Salze des Calciums, Zinks oder Aluminiums der Stearinsäure sowie Dialkylketone, z.B. Distearylketon, eingesetzt werden.

Ferner betrifft die vorliegende Erfindung ein Polyamid, herstellbar nach einem der Verfahren.

Die erfindungsgemäß erhaltenen bzw. erfindungsgemäßen Mischungen aus Polyamiden, inbesondere Polyamid-6 und dessen Copolymere, und thermolastischen Polymeren kann man zur Herstellung von Fasern, Filmen und Formkörpern verwenden.

Die Vorteile des erfindungsgemäßen Verfahrens gegenüber bekannten Verfahren liegen u.a. darin, daß die Kettenlänge der thermoplastischen Polymere nicht oder nur geringfügig verkürzt wird und die Polymere sehr fein in den Zusammensetzungen dispergiert vorliegen. Zudem ist erfindungsgemäß der Einsatz von Aminonitrilen zur Herstellung von Polyamid-6 möglich.

Ein weiterer Vorteil ist die helle Eigenfarbe der Zusammensetzungen, die nach dem erfindungsgemäßen Verfahren erhältlich sind.

Die Erfindung wird nachstehend anhand von Beispielen näher erläutert.

### Beispiele

### Probenpräparation und Analytik

Die sogenannte relative Viskosität (RV) als Maß für den Molekulargewichtsaufbau und Polymerisationsgrad wurde in 1 Gew.-%iger Lösung bei extrahiertem Material und in 1,1 Gew.-%iger Lösung bei unextrahiertem Polymer in 96%iger Schwefelsäure bei 25°C mittels Viskosimeter nach Ubbelohde bestimmt. Unextrahierte Polymere wurden vor der Analyse 20 Stunden im Vakuum getrocknet.

Die Bestimmung des Amino- und Carboxylendgruppengehalts erfolgte am extrahierten Polycaprolactam und wurde als acidimetrische Titration durchgeführt. Die Aminogruppen wurden in Phenol/Methanol 70:30 (Gew.-Teile) als Lösungsmittel mit Perchlorsäure titriert. Die Carboxylendgruppen wurden in Benzylalkohol als Lösungsmittel mit Kalilauge titriert.

Zur Extraktion wurden 100 Gew.-Teile Polycaprolactam mit 400 Gew.-Teilen vollentsalztem Wasser bei einer Temperatur von 100°C für eine Dauer von 32 Stunden unter Rückfluß gerührt bzw. extrahiert und nach Entfemen des Wassers milde, das heißt ohne Nachkondensation, bei einer Temperatur von 100°C für eine Zeitdauer von 20 Stunden im Vakuum getrocknet.

Sämtliche Experimente wurden in einer mehrstufigen Verfahrensapparatur durchgeführt. Die erste Verfahrensstufe mit einem Leervolumen von 1 Liter und einer Innenlänge von 1000 mm wurde vollständig mit Raschig-Ring-Füllkörpern (Durchmesser 3 mm, Länge 3 mm) oder mit Titandioxid-Granulat gefüllt. Das Granulat (Typ S 150 von Finnti) bestand zu 100 % aus TiO₂, welches in der sogenannten Anatas-Modifikation vorlag, und hatte eine Stranglänge zwischen 2 und 14 mm, eine Strangdicke von ca. 4 mm und eine spezifische Oberfläche von mehr als 100 m²/g. Als zweite Stufe wurde ein 2 Liter-Abscheidekessel eingesetzt. Die dritte Stufe war ein mit Raschig-Ringen (Durchmesser 6 mm, Länge 6 mm) oder mit dem oben beschriebenen TiO₂-Granulat gefülltes Strömungsrohr (Volumen 1 l, Länge 1000 mm). Die vierte Verfahrensstufe bestand wiederum aus einem Abscheidekessel (Volumen 21), aus dem die hergestellte Polymerschmelze mit Hilfe einer Zahnradpumpe strangförmig ausgefahren wurde.

Die Verfahrensapparatur wurde sowohl mit den Stufen 1, 2 und 4 (Bsp. 4,5,6) als auch mit den Stufen 1, 2 3 und 4 (Bsp. 1,2,3) betrieben. Die thermoplastischen Polymere wurden vor der 4. Stufe in das Reaktionsgemisch eingetragen. Zur Präparation der Vergleichsprodukte bzw. **Vergleichsbeispiele** wurden Polymere aus ACN unter gleichen Verfahrensbedingungen bzw. bei gleichen Verfahrensparametern ohne thermoplastische Polymere hergestellt.

### Tabellarische Darstellung der Beispiele

Die Verfahrensparameter und die Produkteigenschaften sind im folgenden tabellarisch dargestellt. Als 'Durchsatz' wird der Massestrom der Reaktionsmischung durch die erste Verfahrensstufe bezeichnet.

### Verwendete thermoplastische Polymere

- PS:: Polyarylenethersulfon mit wiederkehrenden Einheiten der Formel I₂, charakterisiert durch eine Viskositätszahl von 48 ml/g, beispielsweise Ultrason S 1010 der Firma BASF.
- SAN:: Poly(styrol-co-acrylnitril), charakterisiert durch einen Anteil an Acrylnitril von 25 Gew.-% und einer Viskositätszahl von 80 ml/g (gemessen an 0,5 Gew.-%igen Lösungen in Dimethylformamid bei 25°C.

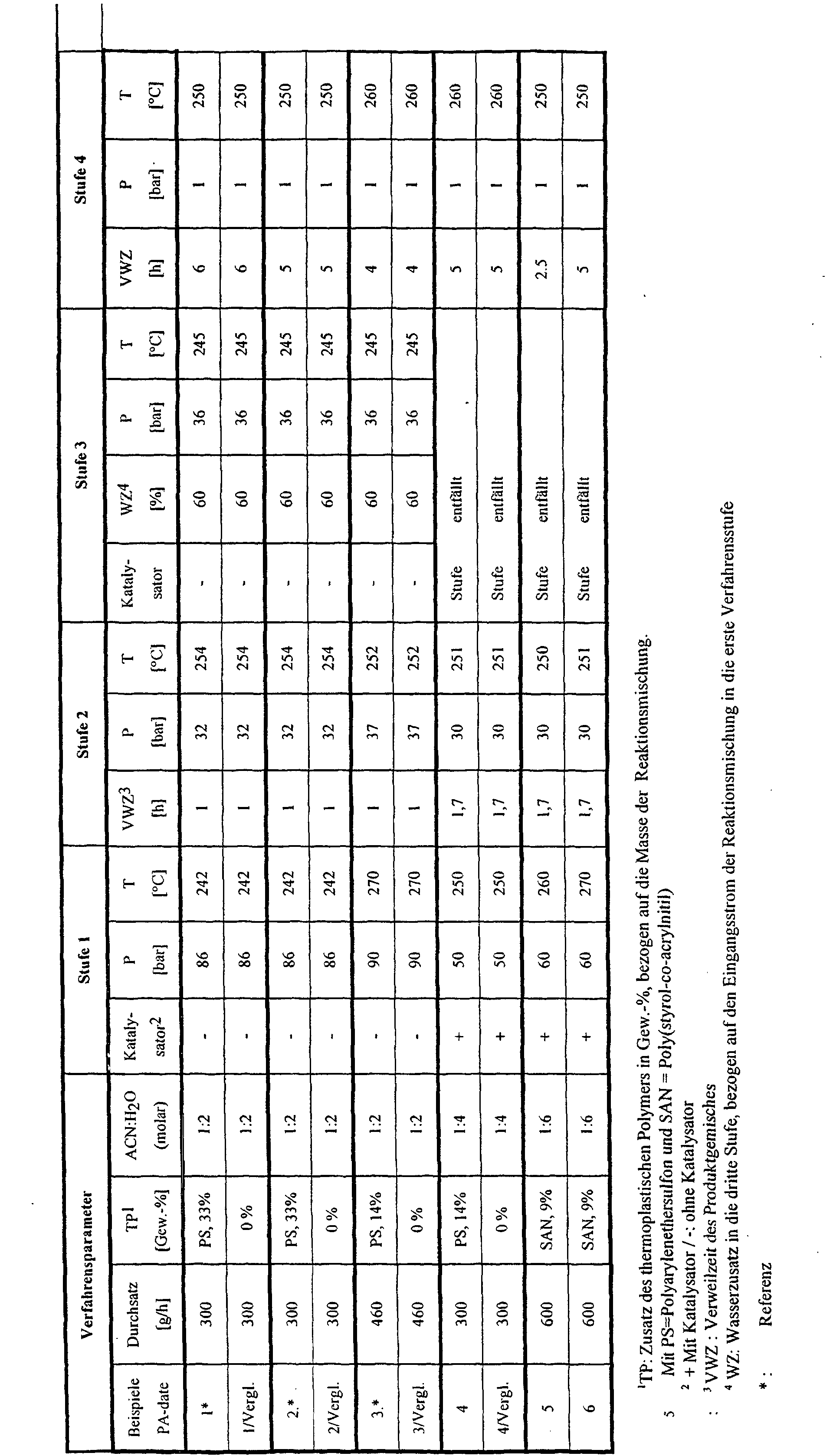

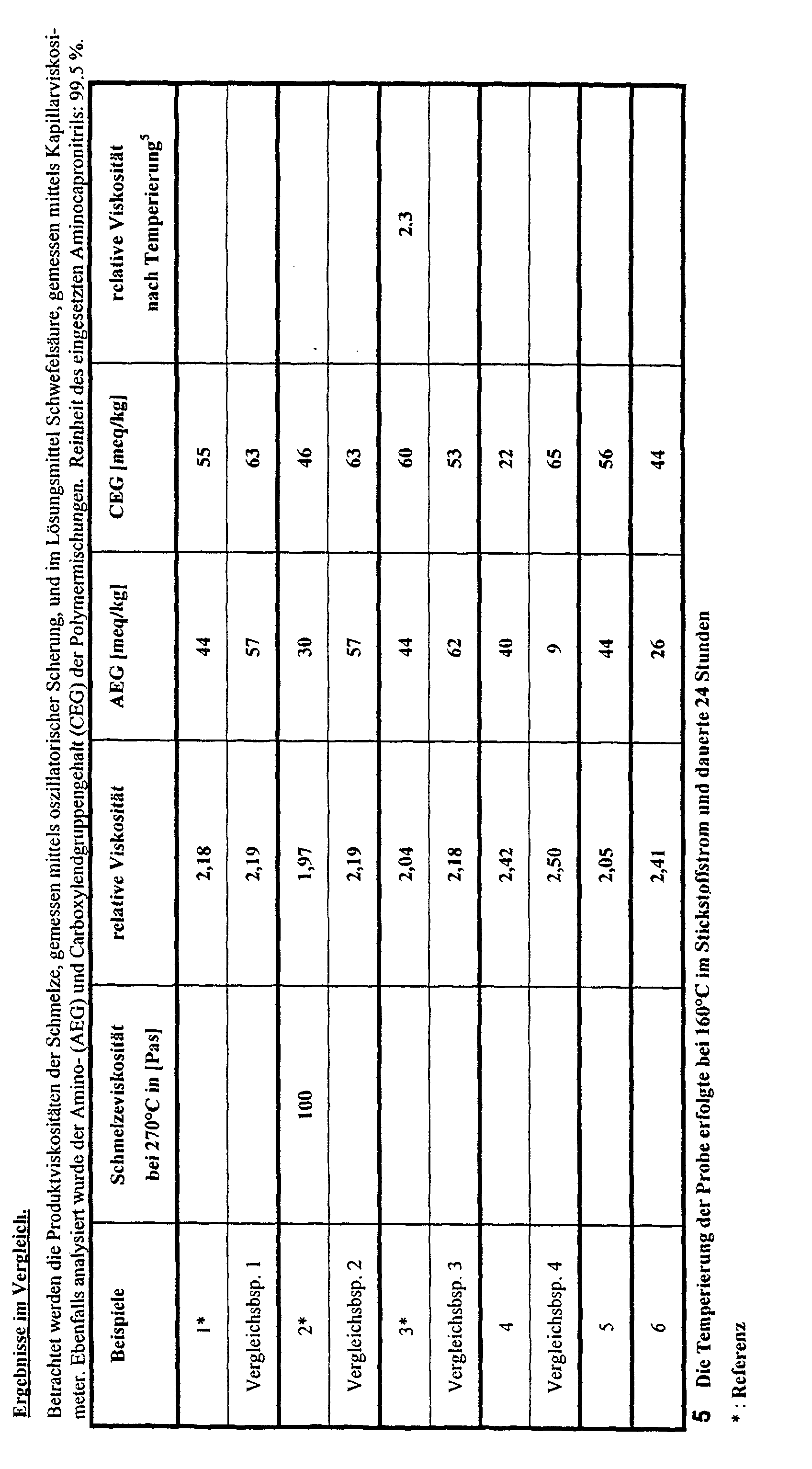

## Patentansprüche

1. Verfahren zur Herstellung von Polymermischungen durch Umsetzung mindestens eines Aminonitrils mit Wasser in Gegenwart von thermoplastischen Polymeren, ausgewählt aus Polyarylenethern, Polyetherimiden, Polyamidimiden, Styrol-Homo- und -Copolymeren, kautschukelastischen Pfropfcopolymeren, Ethylencopolymeren, Polyamiden, hergestellt aus Dicarbonsäuren und Diaminen und Gemischen davon und gegebenenfalls weiteren polyamidbildenden Monomeren, das die folgenden Stufen umfaßt:
(1) Umsetzung mindestens eines Aminonitrils mit Wasser bei einer Temperatur von 90 bis 400 °C und einem Druck von 0,1 bis 35 x 10⁶ Pa, wobei ein Umsetzungsgemisch erhalten wird,
(2) weitere Umsetzung des Umsetzungsgemischs bei einer Temperatur von 150 bis 400 °C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden und die erste Gasphase von der ersten flüssigen oder der ersten festen Phase oder dem Gemisch aus erster flüssiger und erster fester Phase abgetrennt wird, und
(3) Versetzen der ersten flüssigen oder der ersten festen Phase oder des Gemischs aus erster flüssiger und erster fester Phase mit einer gasförmigen oder flüssigen Phase, die Wasser enthält, bei einer Temperatur von 150 bis 370 °C und einem Druck von 0,1 bis 30 x 10⁶ Pa, wobei die Polymermischung erhalten wird, wobei in einer oder mehreren der Stufen die thermo-plastischen Polymere und gegebenenfalls weiteren polyamidbildenden Monomere zugesetzt werden, wobei die Umsetzung in den Stufen 1, 2 und/oder 3 in Gegenwart eines Brönsted-Säurekatalysators, ausgewählt aus einem Beta-Zeolit-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframdioxid ersetzt sein können, durchgeführt wird.

2. Verfahren nach Anspruch 1, das zusätzlich folgende Stufe umfaßt:
(4) Nachkondensation der Polymermischung bei einer Temperatur von 200 bis 350 °C und einem Druck, der niedriger ist als der Druck der Stufe 3, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils die Polymermischung enthält, erhalten werden.

3. Verfahren zur Herstellung von Polymermischungen durch Umsetzung mindestens eines Aminonitrils mit Wasser in Gegenwart von thermoplastischen Polymeren, ausgewählt aus Polyarylenethern, Polyetherimiden, Polyamidimiden, Styrol-Homo- und -Copolymeren, kautschuklastischen Pfropfcopolymeren, Ethylencopolymeren, Polyamiden, hergestellt aus Dicarbonsäuren und Diaminen und Gemischen davon und gegebenenfalls weiteren polyamidbildenden Monomeren, das die folgenden Stufen umfaßt:
(1) Umsetzung mindestens eines Aminonitrils mit Wasser bei einer Temperatur von 90 bis 400 °C und einem Druck von 0,1 bis 35 x 10⁶ Pa, wobei ein Umsetzungsgemisch erhalten wird,
(2) weitere Umsetzung des Umsetzungsgemischs bei einer Temperatur von 150 bis 400 °C und einem Druck, der niedriger ist, als der Druck in Stufe 1, wobei die Temperatur und der Druck so gewählt werden, daß eine erste Gasphase und eine erste flüssige oder eine erste feste Phase oder ein Gemisch aus erster fester und erster flüssiger Phase erhalten werden, und die erste Gasphase von der ersten flüssigen oder der ersten festen Phase oder dem Gemisch aus erster flüssiger und erster fester Phase abgetrennt wird, und
(3) Nachkondensation der ersten flüssigen oder der ersten festen Phase oder des Gemischs aus erster flüssiger und erster fester Phase bei einer Temperatur von 200 bis 350 °C und einem Druck, der niedriger ist als der Druck der Stufe 2, wobei die Temperatur und der Druck so gewählt werden, daß eine zweite, Wasser und Ammoniak enthaltende Gasphase und eine zweite flüssige oder zweite feste Phase oder ein Gemisch aus zweiter flüssiger und zweiter fester Phase, die (das) jeweils die Polymermischung enthält, erhalten werden, wobei in einer oder mehreren der Stufen die thermoplastischen Polymere und gegebenenfalls weiteren polyamidbildenden Monomere zugesetzt werden, wobei die Umsetzung in den Stufen 1, 2 und/oder 3 in Gegenwart eines Brönsted-Säurekatalysators, ausgewählt aus einem Beta-Zeolith-, Schichtsilikat- oder einem Titandioxid-Katalysator aus 70 bis 100 Gew.-% Anatas und 0 bis 30 Gew.-% Rutil, in dem bis zu 40 Gew.-% des Titandioxids durch Wolframoxid ersetzt sein können, durchgeführt wird.

4. Verfahren nach einem der Ansprüche 1 bis 3, wobei der Anteil der Aminonitrile an den polyamidbildenden Monomeren insgesamt 30 bis 100 Gew.-% beträgt.

5. Verfahren nach einem der Ansprüche 1 bis 4, wobei der Anteil der thermoplastischen Polymere im Reaktionsgemisch 1 bis 75 Gew.-%, bezogen auf das gesamte Reaktionsgemisch, beträgt

6. Verfahren nach einem der Ansprüche 1 bis 5, wobei als Aminonitril ein ω-Aminoalkylnitril mit einem Alkylenrest (-CH₂-) von 4 bis 12 C-Atomen oder ein Aminoalkylarylnitril mit 8 bis 13 C-Atomen umgesetzt wird.

## Claims

1. A process for producing polymer blends by reacting at least one aminonitrile with water in the presence of thermoplastic polymers selected from polyarylene ethers, polyetherimides, polyamidoimides, styrene homo- and copolymers, elastomeric graft copolymers, ethylene copolymers, polyamides prepared from dicarboxylic acids and diamines and mixtures thereof, and optionally further polyamide-forming monomers, which comprises the following steps:
(1) reacting at least one aminonitrile with water at a temperature from 90 to 400°C and a pressure from 0.1 to 35 × 10⁶ Pa to obtain a reaction mixture,
(2) further reacting the reaction mixture at a temperature from 150 to 400°C and a pressure which is lower than the pressure in step 1, the temperature and pressure being selected so as to obtain a first gas phase and a first liquid or a first solid phase or a mixture of first solid and first liquid phase and separate the first gas phase from the first liquid or the first solid phase or the mixture of first liquid and first solid phase, and
(3) admixing the first liquid or the first solid phase or the mixture of first liquid and first solid phase with a gaseous or liquid phase comprising water at a temperature from 150 to 370°C and a pressure from 0.1 to 30 × 10⁶ Pa to obtain the polymer blend, wherein in one or more of the steps the thermoplastic polymers and optionally further polyamide-forming monomers are added, wherein the reaction in steps 1, 2 and/or 3 is carried out in the presence of a Brönsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide.

2. A process as claimed in claim 1, additionally comprising the following step:
(4) postcondensing the polymer blend at a temperature from 200 to 350°C and a pressure which is lower than the pressure of step 3, the temperature and pressure being selected so as to obtain a second, water- and ammonia-comprising gas phase and a second liquid or second solid phase or a mixture of second liquid and second solid phase, which each comprise the polymer blend.

3. A process for producing polymer blends by reacting at least one aminonitrile with water in the presence of thermoplastic polymers selected from polyarylene ethers, polyetherimides, polyamidoimides, styrene homo- and copolymers, elastomeric graft copolymers, ethylene copolymers, polyamides prepared from dicarboxylic acids and diamines and mixtures thereof, and optionally further polyamide-forming monomers, which comprises the following steps:
(1) reacting at least one aminonitrile with water at a temperature from 90 to 400°C and a pressure from 0.1 to 35 × 10⁶ Pa to obtain a reaction mixture,
(2) further reacting the reaction mixture at a temperature from 150 to 400°C and a pressure which is lower than the pressure in step 1, the temperature and pressure being selected so as to obtain a first gas phase and a first liquid or a first solid phase or a mixture of first solid and first liquid phase and separate the first gas phase from the first liquid or the first solid phase or the mixture of first liquid and first solid phase, and
(3) postcondensing the first liquid or the first solid phase or the mixture of first liquid and first solid phase at a temperature from 200 to 350°C and a pressure which is lower than the pressure of step 2, the temperature and pressure being selected so as to obtain a second, water- and ammonia-comprising gas phase and a second liquid or second solid phase or a mixture of second liquid and second solid phase, which each comprise the polymer blend, wherein in one or more of the steps the thermoplastic polymers and optionally further polyamide-forming monomers are added, wherein the reaction in steps 1, 2 and/or 3 is carried out in the presence of a Brönsted acid catalyst selected from a beta-zeolite catalyst, a sheet-silicate catalyst or a titanium dioxide catalyst comprising from 70 to 100% by weight of anatase and from 0 to 30% by weight of rutile and in which up to 40% by weight of the titanium dioxide may be replaced by tungsten oxide.

4. A process as claimed in any of claims 1 to 3, wherein aminonitriles account in total for from 30 to 100% by weight of the polyamide-forming monomers.

5. A process as claimed in any of claims 1 to 4, wherein the thermoplastic polymer content of the reaction mixture is from 1 to 75% by weight, based on the entire reaction mixture.

6. A process as claimed in any of claims 1 to 5, wherein the aminonitrile used is an ω-aminoalkyl nitrile having an alkylene moiety (-CH₂-) of from 4 to 12 carbon atoms or an aminoalkylaryl nitrile having from 8 to 13 carbon atoms.

## Revendications

1. Procédé de préparation de mélanges de polymères par réaction d'au moins un aminonitrile avec de l'eau en présence de polymères thermoplastiques, choisis parmi des éthers de polyarylène, des polyétherimides, des polyamideimides, des homopolymères et copolymères de styrène, des copolymères greffés élastiques de type caoutchouc, des copolymères d'éthylène, des polyamides, préparés à partir d'acides dicarboxyliques et de diamides et leurs mélanges, et éventuellement d'autres monomères générateurs de polyamide, ce procédé comportant les étapes suivantes :
1) une réaction d'au moins un aminonitrile avec de l'eau à une température de 90 à 400°C et à une pression de 0,1 à 35 x 10⁶ Pa, un mélange réactionnel étant obtenu,
(2) une réaction ultérieure du mélange réactionnel à une température de 150 à 400°C et à une pression qui est inférieure à la pression de l'étape 1, la température et la pression étant choisies de façon à obtenir une première phase gazeuse et une première phase liquide ou une première phase solide ou un mélange de première phase solide et de première phase liquide et à isoler la première phase gazeuse de la première phase liquide ou de la première phase solide ou du mélange de première phase liquide et de première phase solide, et
(3) une addition, à la première phase liquide ou à la première phase solide ou au mélange de première phase liquide et de première phase solide, d'une phase gazeuse ou liquide qui contient de l'eau, à une température de 150 à 370°C et à une pression de 0,1 à 30 x 10⁶ Pa, le mélange de polymères étant obtenu, les polymères thermoplastiques et éventuellement d'autres monomères générateurs de polyamide étant ajoutés dans une ou plusieurs des étapes, la réaction dans les étapes 1, 2 et/ou 3 étant effectuée en présence d'un catalyseur à base d'acide de Brönsted, choisi parmi un catalyseur à base de bêta-zéolite, de silicate lamellaire ou d'un dioxyde de titane constitué de 70 à 100% en poids d'anatase et de 0 à 30% en poids de rutile, dans lequel jusqu'à 40% en poids du dioxyde de titane peuvent être remplacés par du dioxyde de tungstène.

2. Procédé suivant la revendication 1, qui comporte en supplément les étapes suivantes:
(4) une condensation ultérieure du mélange de polymères à une température de 200 à 350°C et à une pression qui est inférieure à la pression de l'étape (3), la température et la pression étant choisies de façon à obtenir une deuxième phase gazeuse contenant de l'eau et de l'ammoniac et une deuxième phase liquide ou deuxième phase solide ou un mélange de deuxième phase liquide et de deuxième solide, qui contient respectivement le mélange de polymères.

3. Procédé de préparation de mélanges de polymères par réaction d'au moins un aminonitrile avec de l'eau en présence de polymères thermoplastiques, choisis parmi des éthers de polyarylène, des polyétherimides, des polyamideimides, des homopolymères et copolymères de styrène, des copolymères greffés élastiques de type caoutchouc, des copolymères d'éthylène, des polyamides, préparés à partir d'acides dicarboxyliques et de diamines et de leurs mélanges, et éventuellement d'autres monomères générateurs de polyamide, ce procédé comportant les étapes suivantes:
1) une réaction d'au moins un aminonitrile avec de l'eau à une température de 90 à 400°C et à une pression de 0,1 à 35 x 10⁶ Pa, un mélange réactionnel étant obtenu,
(2) une réaction ultérieure du mélange réactionnel à une température de 150 à 400°C et à une pression qui est inférieure à la pression de l'étape 1, la température et la pression étant choisies de façon à obtenir une première phase gazeuse et une première phase liquide ou une première phase solide ou un mélange de première phase solide et de première phase liquide et à isoler la première phase gazeuse de la première phase liquide ou de la première phase solide ou du mélange de première phase liquide et de première phase solide, et
(3) une condensation ultérieure de la première phase liquide ou de la première phase solide ou du mélange de première phase liquide et de première phase solide à une température de 200 à 350°C et à une pression qui est inférieure à la pression de l'étape 2, la température et la pression étant choisies de façon à obtenir une deuxième phase gazeuse contenant de l'eau et de l'ammoniac et une deuxième phase liquide ou une deuxième phase solide ou un mélange de deuxième phase liquide et de deuxième solide, qui contient respectivement le mélange de polymères, les polymères thermoplastiques et éventuellement d'autres monomères générateurs de polyamides étant ajoutés dans une ou plusieurs des étapes, la réaction dans les étapes 1, 2 et/ou 3 étant effectuée en présence d'un catalyseur à base d'acide de Brönsted, choisi parmi un catalyseur à base de bêta-zéolite, de silicate lamellaire ou d'un dioxyde de titane constitué de 70 à 100% en poids d'anatase et de 0 à 30% en poids de rutile, dans lequel jusqu'à 40% en poids du dioxyde de titane peuvent être remplacés par de l'oxyde de tungstène.

4. Procédé suivant l'une des revendications 1 à 3, dans lequel la fraction des aminonitriles aux monomères générateurs de polyamide est globalement de 30 à 100% en poids.

5. Procédé suivant l'une des revendications 1 à 4, dans lequel la fraction des polymères thermoplastiques dans le mélange réactionnel est de 1 à 75% en poids, par rapport à la totalité du mélange réactionnel.

6. Procédé suivant l'une des revendications 1 à 5, dans lequel on fait réagir, comme aminonitrile, un ω-aminoalkylnitrile comportant un radical alkylène (-CH₂-) de 4 à 12 atomes de C ou un aminoalkylarylnitrile comportant 8 à 13 atomes de C.
